# EUROPÄISCHE PATENTSCHRIFT

(11) **EP 3 832 343 B1**
(45) Veröffentlichungstag und Bekanntmachung des Hinweises auf die Patenterteilung: **23.07.2025**
(21) Anmeldenummer: 19290116.3
(22) Anmeldetag: 05.12.2019
(51) Int. Cl.: G01S 7/481, G01S 17/88, B65G 1/137

(54) **ERFASSMODUL FÜR LAGERVORRICHTUNG MIT SENSOREINRICHTUNGEN ZUM ERFASSEN EINER FEHL- BZW. FÜLLMENGE VON LAGERGUT MITTELS OPTISCHER ABSTANDSMESSUNG**
DETECTION MODULE FOR A BEARING DEVICE WITH SENSOR DEVICES FOR DETECTING A FAULT OR FILL LEVEL OF STORAGE GOODS WITH OPTICAL DISTANCE MEASUREMENT
MODULE DE DÉTECTION POUR DISPOSITIF PALIER POURVU DE DISPOSITIFS CAPTEURS PERMETTANT DE DÉTECTER UNE ERREUR OU UN NIVEAU DE REMPLISSAGE DE MARCHANDISES ENTREPOSÉES AU MOYEN DE LA MESURE DE DISTANCE OPTIQUE

(43) Veröffentlichungstag der Anmeldung: 09.06.2021
(73) Patentinhaber: Adolf Würth GmbH & Co. KG, 74653 Künzelsau (DE); Würth International AG, 7000 Chur (CH)
(72) Erfinder: Hohl, Wolfgang, 74653 Amrichshausen (DE); Koch, Simon, 74677 Dörzbach (DE); Marquette, Adrien, 74523 Schwäbisch Hall (DE); Scheuber, Michael, 74243 Langenbrettach (DE)
(74) Vertreter: Dilg, Haeusler, Schindelmann Patentanwaltsgesellschaft mbH

(56) Entgegenhaltungen:
- WO-A1-2007/012099
- DE-A1- 102013 222 263
- DE-A1- 19 714 799
- DE-U1- 20 319 293
- DE-U1- 20 319 293
- DE-U1- 202016 105 648

## Beschreibung

Die Erfindung betrifft eine Lagervorrichtung, ein Lagerverwaltungssystem und ein Verfahren zum Nachrüsten einer Lagervorrichtung.

Die logistische Handhabung großer Warenlager stellt herkömmlich besonders dann eine große Herausforderung dar, wenn die Warenmengen groß sind, die Warenarten stark diversifiziert sind, die Waren und der Warenbestand einem häufigen Wechsel unterworfen sind und die einzelnen Lagerorte der Waren räumlich weit auseinander liegen bzw. auch die Lagerorte häufig wechseln.

Solche Warenbestände werden herkömmlich rechnergestützt verwaltet. Dezentral kontrollieren Personen die Warenbestände und bestellen bei Bedarf lokal Waren nach. Dieses Verfahren ist träge, zeitintensiv, arbeitsintensiv und erfordert durch die lokale Bearbeitung einzelner Warenbestände viele dezentrale Ressourcen.

Aus der WO 2017/084649 A1 ist ein Lagervorrichtung mit Regalböden bekannt, denen optische Sensoren zugeordnet sind, um die Befüllung bzw. den Füllstand der Regalböden mit Gut zu erfassen. WO 2017/084649 A1 offenbart eine Vorrichtung zur Lagerung von Stückgut mit mindestens einem Boden mit einer Oberseite, auf der das Stückgut in einem Überwachungsraum lagerbar ist, und mit einer Unterseite und mit Öffnungen, die von der Oberseite zu der Unterseite verlaufen, sowie Signalgebern mit zugeordneten Signalempfängern, wobei mindestens eine Sorte in den Öffnungen an der Unterseite angeordnet ist und ein Signal der Signalgeber durch die Signalempfänger detektierbar ist, sowie einer Steuerelektronik mit Steuersystem, die die Signalgeber und Signalempfänger mit Strom versorgen sowie Signale der Signalempfänger verarbeiten sowie sie identifizieren, um einen Belegzustand des Überwachungsraums mit Stückgut an Hand des Vorliegens eines Signals an dem jeweiligen Signalempfänger zu identifizieren.

Das System gemäß WO 2017/084649 A1 ist leistungsfähig, benötigt aber eine relativ große Anzahl von Sensoren.

DE 20 2016 105 648 U1 offenbart eine Lagervorrichtung mit den Merkmalen des Oberbegriffs von Anspruch 1.

WO 2007/012099 A1 offenbart eine Erfassungseinrichtung und zwei Messeinrichtungen, die jeweils mit einer externen Steuereinheit des Rechnersystems verbunden sind. Die Erfassungsstränge sind V-förmig angeordnet.

DE 203 19293 U1 offenbart eine Vorrichtung zum Messen des Füllstands von Lagergut. DE 10 2013 222263 A1 offenbart ein Warenbestandsverwaltungssystem. DE 197 14 799 A1 offenbart ein Bestandserfassungs- und Kontrollsystem z.B. für Lebensmittelautomaten.

Es ist eine Aufgabe der vorliegenden Erfindung, eine Überwachung eines Lagerbestands mit geringem Aufwand und hoher Präzision zu ermöglichen.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß der vorliegenden Erfindung ist eine Lagervorrichtung geschaffen, aufweisend Montagestrukturen, insbesondere Regalstangen, zum, insbesondere austauschbaren oder nachrüstenden, Montieren von Erfassmodulen;die Erfassmodule, die an den Montagestrukturen montiert oder montierbar sind; und eine Mehrzahl von Aufnahmebereichen, von denen jeder zum Aufnehmen von Lagergut ausgebildet ist; wobei jede Sensoreinrichtung des mindestens einen Erfassmoduls einem jeweiligen Aufnahmebereich zugeordnet ist und zum Erfassen der für die Fehlmenge und/oder die Füllmenge von Lagergut in dem jeweils zugeordneten Aufnahmebereich indikativen Sensorinformation ausgebildet ist; wobei die Erfassmodule zum, insbesondere austauschbaren oder nachrüstenden, Montieren an einer Lagervorrichtung, konfiguriert sind und Folgendes aufweisen:einen Trägerkörper; und eine Mehrzahl von Sensoreinrichtungen, die an und/oder in dem Trägerkörper angebracht sind; wobei jede der Sensoreinrichtungen zum Erfassen von Sensorinformation im Rahmen einer optischen Abstandsmessung eingerichtet ist, welche Sensorinformation für eine Fehlmenge und/oder eine Füllmenge von Lagergut in einem einer jeweiligen Sensoreinrichtung zugeordneten Aufnahmebereich der Lagervorrichtung zum Aufnehmen von Lagergut indikativ ist; und die Sensoreinrichtungen derart an dem Trägerkörper angebracht sind, dass jede der Sensoreinrichtungen ausgehend von derselben Hauptoberfläche des Trägerkörpers parallel zueinander einen elektromagnetischen Primärstrahl emittieren kann, insbesondere geneigt oder senkrecht zu der Hauptoberfläche des Trägerkörpers, wobei jede der Sensoreinrichtungen ausgebildet ist, einen von dem Lagergut reflektierten elektromagnetischen Sekundärstrahl in Reaktion auf das Emittieren des elektromagnetischen Primärstrahls zu erfassen, wobei die Erfassmodule ein erstes Erfassmodul mit einer Steuereinrichtung und ein zweites Erfassmodul ohne eigene Steuereinrichtung aufweisen, das mittels der Steuereinrichtung des ersten Erfassmoduls steuerbar ist; und die Lagervorrichtung zumindest eines der folgenden Merkmale aufweist:wobei das erste Erfassmodul und das zweite Erfassmodul vertikal übereinander angebracht sind, insbesondere das erste Erfassmodul vertikal über dem zweiten Erfassmodul angebracht ist;wobei das erste Erfassmodul eine größere Dimension aufweist als das zweite Erfassmodul.

Gemäß noch einem anderen Ausführungsbeispiel der vorliegenden Erfindung ist ein Lagerverwaltungssystem bereitgestellt, das eine Mehrzahl von Lagervorrichtungen mit den oben beschriebenen Merkmalen und eine Verwaltungseinrichtung aufweist, die eingerichtet ist, basierend auf der von den Sensoreinrichtungen erfassten Sensorinformation einen Bestand von Lagergut in den Aufnahmebereichen zu verwalten.

Gemäß noch einem anderen Ausführungsbeispiel der vorliegenden Erfindung ist ein Verfahren zum Nachrüsten einer Aufnahmebereiche zum Aufnehmen von Lagergut aufweisenden Lagervorrichtung bereitgestellt, wobei das Verfahren ein Montieren von mindestens einem Erfassmodul mit den oben beschriebenen Merkmalen an Montagestrukturen (insbesondere Regalstangen) der Lagervorrichtung, ein Durchführen einer optischen Abstandsmessung mittels einer jeweiligen, einem jeweiligen Aufnahmebereich zugeordneten Sensoreinrichtung des mindestens einen Erfassmoduls zum Erfassen der für eine Fehlmenge und/oder eine Füllmenge von Lagergut in einem jeweils zugeordneten Aufnahmebereich indikativen Sensorinformation, und ein Überwachen des Bestands von Lagergut der Lagervorrichtung durch Auswertung der Sensorinformation aufweist,

Im Rahmen dieser Anmeldung kann unter dem Begriff "Erfassmodul" insbesondere eine modulartige und vorzugsweise plattenförmige Komponente verstanden werden, in die bereits eine Mehrzahl von Sensoreinrichtungen integriert ist. Daher kann das Erfassmodul als Ganzes an eine - auch herkömmliche - Lagervorrichtung angebaut, eingebaut oder in sonstiger Weise montiert werden. Da ein solches Erfassmodul in einem Ausführungsbeispiel keine spezifische Anpassung von damit zusammenwirkenden Lagervorrichtungen erfordert, kann ein solches Erfassmodul auch austauschbar oder im Wege der Nachrüstung an einer Lagervorrichtung anbringbar verwendet werden.

Im Rahmen dieser Anmeldung kann unter dem Begriff "Sensoreinrichtung" insbesondere eine Einrichtung verstanden werden, die zur Durchführung einer optischen Messung ausgebildet ist. Eine solche Sensoreinrichtung kann eine Detektionseinheit zum Detektieren elektromagnetischer Strahlung (insbesondere von sichtbarem Licht oder von Infrarotstrahlung) aufweisen, beispielsweise eine Fotodiode. Optional kann eine solche Sensoreinrichtung auch eine Emittiereinheit zum Aussenden elektromagnetischer Strahlung (insbesondere von sichtbarem Licht oder von Infrarotstrahlung) aufweisen, beispielsweise eine Laserquelle (insbesondere eine Laserdiode) oder eine Leuchtdiode. Eine solche Sensoreinrichtung kann zum Beispiel in Reflexion messen, d.h. einen Abstand zu einem Lagergut detektieren, indem an dem Lagergut reflektierte elektromagnetische Strahlung erfasst wird.

Im Rahmen dieser Anmeldung kann unter dem Begriff "optische Abstandsmessung" insbesondere eine Messung unter Einsatz elektromagnetischer Strahlung (insbesondere von sichtbarem Licht oder von Infrarotlicht) verstanden werden, mit der ein räumlicher Abstand zwischen einer Sensoreinrichtung und Lagergut in einem der Sensoreinrichtung zugeordneten Aufnahmebereich messtechnisch bestimmt werden kann. Insbesondere kann es sich bei dem besagten Lagergut, dessen Abstand zu der Sensoreinrichtung zu bestimmen ist, um das hinterste Lagergut in einer Anordnung mehrerer hintereinander angeordneter Lagergüter handeln, die insbesondere parallel zu einem elektromagnetischen Messstrahl in dem Aufnahmebereich angeordnet sein können.

Im Rahmen dieser Anmeldung kann unter dem Begriff "Aufnahmebereich" insbesondere ein Lagerplatz oder anderer räumlicher Teilbereich einer Lagervorrichtung (zum Beispiel ein Teil einer Auflagefläche eines Regalfachs oder ein ganzes Regalfach) verstanden werden, das zur Lagerung zugeordneter Lagergüter ausgebildet ist. Anders ausgedrückt kann jedem Aufnahmebereich einer Lagervorrichtung oder eines Lagerverwaltungssystem ein bestimmtes Lagergut (zum Beispiel ein Behälter mit bestimmten Schrauben oder bestimmten Dübeln) zugeordnet sein. In einer Datenbank des Lagerverwaltungssystems kann jedem Aufnahmebereich ein bestimmtes Lagergut zugeordnet sein. Ferner können in der Datenbank des Lagerverwaltungssystems für jeden Aufnahmebereich auch die entsprechenden Dimensionen des Aufnahmebereichs hinterlegt sein (zum Beispiel ein definiertes Fachbodenmaß von 500 mm). Insbesondere kann zumindest ein Teil der Aufnahmebereiche zumindest teilweise mit Lagergut bestückt sein, insbesondere in Form von Lagerboxen, Warenbehältern und/oder Schüttgut.

Im Rahmen dieser Anmeldung kann unter dem Begriff "Fehlmenge" insbesondere ein Unterschied zwischen einer Menge von Lagergut bei einer vollständigen Befüllung eines Aufnahmebereichs einer Lagervorrichtung und einer (insbesondere geringeren) tatsächlichen Menge von Lagergut in dem Aufnahmebereich der Lagervorrichtung verstanden werden. Aus der Lagervorrichtung können zum Beispiel von Benutzern Lagergüter entnommen werden, wodurch die Fehlmenge ansteigen kann. In die Lagervorrichtung können durch Nachlieferungen neue Lagergüter eingefüllt werden, wodurch die Fehlmenge wieder absinkt.

Im Rahmen dieser Anmeldung kann unter dem Begriff "Füllmenge" insbesondere eine Restmenge (zum Beispiel eine verbleibende Anzahl) von Lagergütern verstanden werden, die in einem Aufnahmebereich eine Lagervorrichtung enthalten sind. Aus der Lagervorrichtung können zum Beispiel von Benutzern Lagergüter entnommen werden, wodurch die Füllmenge, der Befüllungsgrad oder der Füllstand absinken kann. In die Lagervorrichtung können durch Nachlieferungen neue Lagergüter eingefüllt werden, wodurch die Füllmenge wieder steigt.

Im Rahmen dieser Anmeldung kann unter dem Begriff "Lagervorrichtung" insbesondere ein kastenartiges Gestell mit einem oder vorzugsweise mehreren Lagereinsätzen verstanden werden, das zum Aufstellen, Ablegen, Aufbewahren, etc. von Lagergut ausgebildet ist. Ein solches Gestell kann auf dem Boden stehen und/oder an einer Wand befestigt sein. Zum Beispiel kann die Lagervorrichtung als Lagerregal oder Lagerschrank ausgebildet sein. Wenn ein solches Gestell zumindest teilweise offen ist, kann es zum Beispiel als Regal ausgebildet sein. Bei einer Ausgestaltung als Schrank kann das Gestell mit Türen versehen sein, die optional abschließbar sein können. Es ist aber zum Beispiel auch möglich, einen Kofferraum oder Laderaum eines Fahrzeugs als Lagervorrichtung zu verwenden oder in anderer Weise eine mobile Lagervorrichtung auszubilden.

Im Rahmen dieser Anmeldung kann unter dem Begriff "Lagerverwaltungssystem" insbesondere eine Anordnung von Lagervorrichtungen verstanden werden, die ganz oder teilweise mit Lagergütern befüllt sein können oder unbefüllt sein können und von einer Verwaltungseinrichtung (zum Beispiel einem Prozessor oder Server) verwaltet werden. Der Befüllungsgrad oder Entleerungsgrad kann lagergutspezifisch bzw. lagerplatzspezifisch sensorisch erfasst werden. Eine zum Beispiel als Prozessor ausgebildete Verwaltungseinrichtung kann auf Basis der sensorisch erkannten Befüllungsgrade oder Entleerungsgrade der Lagervorrichtungen mit den verschiedenen Typen von Lagergütern selbsttätig eine Nachbestellung vornehmen oder auslösen, zum Beispiel wenn ein Restbestand eines jeweiligen Lagerguts einen vorgebbaren Schwellenwert unterschritten hat.

Im Rahmen dieser Anmeldung kann unter "Lagergut" insbesondere ein handelbarer physischer Körper oder ein Warenelement verstanden werden, der gemeinsam mit vielen anderen Warenelementen einen Warenbestand bildet, der einem fortlaufenden Wandel unterworfen sein kann. Beispiele für solche Lagergüter oder Warenelemente sind insbesondere technische Gegenstände oder Komponenten, wie zum Beispiel Werkzeugkomponenten (zum Beispiel Hammer, Schraubendreher, etc.) oder Verbrauchskomponenten (zum Beispiel Schrauben, Nägel, Dübel, etc.), insbesondere verpackt in Verpackungseinheiten wie zum Beispiel Behältern. Beispiele für Art bzw. Typ eines Lagerguts bzw. eines Warenelements sind Kofferinhalte, Maschinenkomponenten, der Inhalt eines Maschinenkoffers, Werkzeugeinlagen, Kanister, Dosen, Flaschen, Kartuschen, Tuben und/oder Schubladeninhalte. Lagergüter, zum Beispiel Schüttgut, können auch in Lagerboxen oder Kartons gelagert sein. Lagergut kann zum Beispiel eine Kleinteileverpackung sein, etwa ein Kartonbehälter mit 100 Schrauben.

Gemäß der Erfindung ist ein Erfassmodul geschaffen, das in einen gemeinsamen Trägerkörper integriert mehrere Sensoreinrichtungen zum jeweiligen Durchführen einer optischen Abstandsmessung aufweist. Mit der optischen Abstandsmessung zum Ermitteln eines räumlichen Abstands zwischen einer jeweiligen Sensoreinrichtung und Lagergut in einem Aufnahmebereich, welcher der jeweiligen Sensoreinrichtung räumlich zugeordnet ist, kann einfach und fehlerrobust eine Fehlmenge bzw. eine Füllmenge des besagten Lagerguts in diesem Aufnahmebereich ermittelt werden. Wenn zum Beispiel das Lagergut in dem Aufnahmebereich jeweils zu einer Entnahmeseite der Lagervorrichtung nach vorne geschoben wird und die jeweilige Sensoreinrichtung an einer der Entnahmeseite gegenüberliegenden oder entgegengesetzten Seite der Lagervorrichtung angeordnet wird, korrespondiert ein größerer räumlicher Abstand infolge entnommener Lagergüter in diesem Aufnahmebereich mit einer höheren Fehlmenge bzw. einer geringeren Füllmenge als ein kleinerer Abstand. Mit einer Abstandsmessung ist eine einzige Sensoreinrichtung für entlang einer gesamten Reihe in dem Aufnahmebereich angeordnete Lagergüter ausreichend, um den Lagergüter-Füllstand in dem gesamten Aufnahmebereich zu erfassen. Daher ist eine geringe Anzahl von Sensoreinrichtungen zum Überwachen von vielen Aufnahmebereichen für Lagergut ausreichend. Mit Vorteil ist es außerdem möglich, ein solches Erfassmodul in einer bestehenden Lagervorrichtung austauschbar zu montieren bzw. eine bestehende Lagervorrichtung mit einem solchen Erfassmodul zum Bereitstellen einer automatischen Überwachung des Befüllungsgrades zugeordneter Aufnahmebereiche nachzurüsten. Eine Anpassung der Lagervorrichtung kann abgesehen vom Nachrüsten mit einem oder mehreren Erfassmodulen mit Vorteil entbehrlich sein, um eine Überwachung eines Lagerbestands zu implementieren. Auf Basis der automatisch ermittelbaren Fehlmenge bzw. Füllmenge von Lagergütern mehrerer Aufnahmebereiche einer oder mehrerer Lagervorrichtungen ist somit auch für extrem komplexe Warenlager eine mit geringem Aufwand erzielbare und wenig fehleranfällige Überwachung eines Lagerbestands möglich, ohne dass hierfür eine Mitwirkung der Benutzer vonnöten ist. Mit Vorteil kann das universelle Erfassmodul unabhängig von einer bestimmten Lagervorrichtung und ohne oder ohne nennenswerte bauliche Veränderung der Lagervorrichtung selbst an die Lagervorrichtung angebaut werden. Dies prädestiniert ein Erfassmodul gemäß einem exemplarischen Ausführungsbeispiel der Erfindung zum universellen Montieren an einer im Wesentlichen beliebigen Lagervorrichtung oder zum Nachrüsten einer im Wesentlichen beliebigen bereits bestehenden Lagervorrichtung. Zum Beispiel ist ein Ausstatten einer Lagervorrichtung mit Erfassmodulen bei stationären Lagervorrichtungen (zum Beispiel Lagerregalen) ebenso möglich wie bei mobilen Lagervorrichtungen (zum Beispiel als Fahrzeugausstattung).

Im Weiteren werden zusätzliche Ausführungsbeispiele des Erfassmoduls, der Lagervorrichtung, des Lagerverwaltungssystems und des Verfahrens beschrieben.

Ist ein Aufnahmebereich, der einer jeweiligen Sensoreinrichtung zugeordnet ist, vollständig von Lagergut entleert, ist gegebenenfalls gar keine Abstandsmessung mehr möglich, da ein von der Sensoreinrichtung ausgesandter Lichtstrahl oder dergleichen an Lagergut in diesem Aufnahmebereich nicht mehr reflektiert werden kann. Ein nicht detektierbarer reflektierter elektromagnetischer Sekundärstahl kann daher die Schlussfolgerung zulassen, dass eine verbleibende Füllmenge in dem Aufnahmebereich Null ist bzw. eine Fehlmenge der maximalen Aufnahmekapazität von Lagergütern in dem Aufnahmebereich entspricht.

Gemäß einem Ausführungsbeispiel kann der Trägerkörper als Trägerplatte ausgebildet sein. Zum Beispiel kann eine solche Trägerplatte als flächiger Körper ausgebildet sein, dessen Dicke maximal ein Fünftel von dessen Länge und von dessen Breite ist. Zum Beispiel kann die Platte als Blechplatte oder Kunststoffplatte ausgebildet sein. Eine solche Trägerplatte ist zum Beispiel als Rückwand in einfacher Weise an einer bestehenden Lagervorrichtung (zum Beispiel einem Lagerregal) montierbar bzw. nachrüstbar.

Gemäß einem Ausführungsbeispiel kann die Trägerplatte eine Breite von mindestens 500 mm, insbesondere mindestens 1000 mm, aufweisen. Gemäß einem Ausführungsbeispiel kann die Trägerplatte eine Höhe von weniger als 150 mm (insbesondere dann, wenn das Erfassmodul eine Steuereinrichtung aufweist) oder von weniger als 100 mm (insbesondere dann, wenn das Erfassmodul keine Steuereinrichtung aufweist) aufweisen. Gemäß einem Ausführungsbeispiel kann die Trägerplatte eine Dicke von weniger als 20 mm aufweisen.

Gemäß einem Ausführungsbeispiel sind die Sensoreinrichtungen derart an dem Trägerkörper angebracht, dass jede der Sensoreinrichtungen ausgehend von derselben Hauptoberfläche des Trägerkörpers parallel zueinander einen elektromagnetischen Primärstrahl emittieren kann. Es ist zum Beispiel möglich, dass die elektromagnetischen Primärstrahlen geneigt oder senkrecht zu der Hauptoberfläche des Trägerkörpers emittiert werden. Anschaulich kann eine Sensoreinrichtung einen zum Beispiel als Lichtstrahl ausgebildeten elektromagnetischen Parallelstrahl in Richtung Lagergut emittieren.

Gemäß einem Ausführungsbeispiel ist jede der Sensoreinrichtungen ausgebildet, einen von dem Lagergut reflektierten elektromagnetischen Sekundärstrahl in Reaktion auf das Emittieren des elektromagnetischen Primärstrahls zu erfassen. Auf diese Weise kann mittels einer optischen Reflexionsmessung ein Abstand zu dem bezogen auf die Sensoreinrichtung nächstgelegene Lagergut in dem zugehörigen Aufnahmebereich ermittelt werden, indem besagter elektromagnetischer Primärstrahl von dem nächstgelegenen Lagergut zu der Sensoreinrichtung zurückreflektiert und dort detektiert wird.

Gemäß einem Ausführungsbeispiel kann das Erfassmodul eine Steuereinrichtung (zum Beispiel einen Prozessor) aufweisen, die von den Sensoreinrichtungen des der Steuereinrichtung zugehörigen Erfassmoduls und/oder von Sensoreinrichtungen eines anderen Erfassmoduls ohne Steuereinrichtung übermittelte Sensordaten zur Weiterverarbeitung an eine zentrale Verwaltungseinrichtung übermittelt. Die eigentliche Verarbeitung der Sensordaten, Sensorsignale bzw. Sensorinformation kann dann durch die zentrale Verwaltungseinrichtung erfolgen. Auf diese Weise kann eine dezentrale Steuereinrichtung mit überschaubaren Ressourcen bereitgestellt werden. Eine zentrale Intelligenz kann auf Ebene der zentralen Verwaltungseinrichtung zur eigentlichen Datenauswertung konzentriert werden. Dies reduziert den Gesamtaufwand zum Herstellen des Lagerverwaltungssystems.

Alternativ kann die Steuereinrichtung eines Erfassmoduls eingerichtet sein, basierend auf von den Sensoreinrichtungen des Erfassmoduls erfassten Sensordaten für jede der Sensoreinrichtungen einen jeweiligen Abstand zu jeweils zugeordnetem Lagergut und aus dem jeweiligen Abstand eine jeweilige Fehlmenge und/oder einen jeweiligen Füllstand zu ermitteln. Die Sensordaten bzw. Sensorinformation der Sensoreinrichtungen eines Erfassmoduls können somit an die (insbesondere für alle Sensoreinrichtungen eines Erfassmoduls gemeinsam vorgesehene) Steuereinrichtung weitergeleitet werden, welche diese Sensordaten bzw. Sensorinformation verarbeitet und hieraus für jede Sensoreinrichtung und daher auch für jeden zugeordneten Aufnahmebereich einen räumlichen Abstand zu dem zu der jeweiligen Sensoreinrichtung nächstgelegenen Lagergut berechnet. Anschaulich kann für mehrere Sensoreinrichtungen somit eine gemeinsame Steuereinrichtung implementiert werden, welche die Sensorsignale bündelt, auswertet und hieraus eine Fehlmenge und/oder einen Füllstand von Lagergut für jeden dem Erfassmodul zugeordneten Aufnahmebereich ermittelt. Die Steuereinrichtung kann dann als zentrale Intelligenz des Erfassmoduls dienen und Prozessordienste für die Mehrzahl von Sensoreinrichtungen des Erfassmoduls ausführen. Mit Vorteil können die einzelnen Sensoreinrichtungen dann mit einer nur geringen prozessortechnologischen Intelligenz oder sogar ohne jede prozessortechnologische Intelligenz und somit mit geringem Ressourcenaufwand ausgebildet werden können. Die Kombination einer zentralen Intelligenz (in Form der Steuereinrichtung) mit mehreren dezentralen Dummys (in Form der Sensoreinrichtungen) hält den hardwaretechnischen Gesamtaufwand zum Herstellen eines Erfassmoduls somit gering.

Gemäß einem Ausführungsbeispiel kann die Steuereinrichtung eingerichtet sein, basierend auf von Sensoreinrichtungen eines mit der Steuereinrichtung kommunizierfähig gekoppelten anderen Erfassmoduls (insbesondere eines anderen Erfassmoduls ohne Steuereinrichtung) erfassten Sensordaten einen jeweiligen Abstand zu jeweils zugeordnetem Lagergut und aus dem jeweiligen Abstand eine jeweilige Fehlmenge bzw. Füllmenge zu ermitteln. Somit ist es auch möglich, dass eine Steuereinrichtung eines Erfassmoduls auch Sensordaten bzw. Sensorinformation von Sensoreinrichtungen eines anderen Erfassmoduls auswertet und diesbezügliche Fehlmengen und/oder Füllstände ermittelt. Dies kann zum Beispiel vorteilhaft sein, wenn das andere Erfassmodul selbst keine Steuereinrichtung aufweist. Auf diese Weise kann das Lagerverwaltungssystem kompakt und mit geringem apparativen Aufwand ausgebildet werden.

Gemäß einem Ausführungsbeispiel kann die Steuereinrichtung mit den Sensoreinrichtungen kommunizierfähig gekoppelt sein, insbesondere drahtgebunden kommunizierfähig gekoppelt sein. Über eine entsprechende Kommunikationsverbindung können die Sensordaten der Sensoreinrichtungen des Erfassmoduls, das die Steuereinrichtung aufweist, und/oder Sensordaten von Sensoreinrichtungen eines anderen Erfassmodul ohne Steuereinrichtung der Steuereinrichtung übermittelt werden. Über die kurzen Distanzen innerhalb eines Erfassmoduls oder zwischen räumlich benachbarten Erfassmodulen können Drahtverbindungen zum drahtgebundenen Übermitteln von Sensordaten in einfacher Weise an und/oder in den Trägerkörper integriert bzw. zwischen Trägerkörpern verlaufend angeordnet werden. Alternativ kann für die Kommunikation zwischen Steuereinrichtung und Sensoreinrichtungen eines Erfassmoduls oder benachbarter Erfassmodule aber auch ein drahtloses Kommunikationsprotokoll implementiert werden.

Gemäß einem Ausführungsbeispiel kann die Steuereinrichtung mit einer Verwaltungseinrichtung kommunizierfähig gekoppelt sein, drahtlos, insbesondere über WLAN oder Bluetooth, kommunizierfähig gekoppelt sein. Auf diese Weise kann die Steuereinrichtung eines Erfassmoduls die von ihr gesammelten und optional bereits (vor-)verarbeiteten Sensordaten einer zentralen Verwaltungseinrichtung (zum Beispiel ein weiterer Prozessor) zuführen, wo besagte Sensordaten optional (nach-)verarbeitet werden können. Bevorzugt ist jedoch, dass die Steuereinrichtung eines Erfassmoduls die Sensordaten der ihr zugeordneten Sensoreinrichtungen lediglich zusammenfasst bzw. bündelt und entsprechende Datenpakete der zentralen Verwaltungseinrichtung zur eigentlichen Auswertung bereitstellt. Die zentrale Verwaltungseinrichtung (die anschaulich als Datenauswertungseinrichtung im Backend bezeichnet werden kann) kann dann die Datenverarbeitung durchführen, die zum Ermitteln eines Abstands für jeden Aufnahmebereich und folglich zum Ermitteln eines Füll- oder Fehlbestands in jedem Aufnahmebereich führt. Die Kommunikation zwischen Steuereinrichtung(en) und Verwaltungseinrichtung kann bevorzugt drahtlos erfolgen, da die zentrale Verwaltungseinrichtung einerseits und unterschiedliche Steuereinrichtungen unterschiedlicher Erfassmodule unterschiedlicher Lagervorrichtungen andererseits in einem großen räumlichen Abstand zueinander angeordnet sein können. Über solch große Abstände ist eine drahtlose Kommunikation in einfacherer Weise implementierbar als eine drahtgebundene Kommunikation.

Gemäß einem Ausführungsbeispiel kann das Erfassmodul ohne Steuereinrichtung kommunizierfähig, insbesondere über eine Master-Slave-Kommunikationsverbindung, mit einer von dem Erfassmodul extern vorgesehenen Steuereinrichtung (insbesondere eines anderen Erfassmoduls) koppelbar sein und ausgebildet sein, von den Sensoreinrichtungen erfasste Sensordaten bzw. Sensorinformation zur Ermittlung eine Fehlmenge und/oder Füllmenge der externen Steuereinrichtung zu übermitteln. In diesem Zusammenhang kann unter einer Master-Slave-Kommunikationsverbindung insbesondere eine hierarchische Verwaltung des Zugriffs auf eine gemeinsame Ressource in Form eines gemeinsamen Datenkanals zu Zwecken der Steuerung verstanden werden. In einer solchen Implementierung fungiert das Erfassmodul mit Steuereinrichtung somit als Master, wohingegen das hiermit kommunizierfähig gekoppelte Erfassmodul ohne Steuereinrichtung als Slave fungiert. Somit unterwirft sich das Erfassmodul ohne Steuereinrichtung der Steuerung durch das Erfassmodul mit Steuereinrichtung. Aufgrund dieser Master-Slave-Architektur kommt ein Satz mehrerer Erfassmodule mit einer gemeinsamen Steuereinrichtung aus, sodass eine Implementierung mit geringem Ressourcenaufwand möglich ist.

Gemäß einem Ausführungsbeispiel kann jede der Sensoreinrichtungen ausgebildet sein, einen Abstand zu Füllgut zum Beispiel mittels einer optischen Laufzeitmessung, einer optischen Phasenlagemessung und/oder mittels Triangulation (insbesondere Lasertriangulation) zu ermitteln.

Bei eine optischen Laufzeitmessung kann von einer jeweiligen Sensoreinrichtung beispielsweise ein zeitlich kurzer Lichtpuls in den zugeordneten Aufnahmebereich ausgesandt werden, um dort auf ein hier gelagertes Lagergut zu treffen. Die Pulslaufzeit ist die Zeit, die der Lichtstrahl braucht, um von der Sensoreinrichtung zu dem reflektierenden Lagergut und wieder zurück zur Sensoreinrichtung zu laufen. Durch Messen dieser Laufzeitkann über die Lichtgeschwindigkeit die Distanz zwischen Sensoreinrichtung und dem nächstgelegenen Lagergut in dem Aufnahmebereich ermittelt werden.

Bei einer optischen Phasenlagemessung wird der Umstand verwendet, dass eine Phasenverschiebung eines reflektierten kohärenten Lichtstrahl (insbesondere eines Laserstrahls) oder dessen Modulation gegenüber einem ursprünglich von der Sensoreinrichtung ausgesandten Lichtstrahl entfernungsabhängig ist. Diese Phasenverschiebung kann gemessen und benutzt werden, um die zurückgelegte Distanz von Sensoreinrichtung zu dem nächstgelegenen Lagergut im Aufnahmebereich und zurück zu der Sensoreinrichtung zu ermitteln. Wird die Frequenz des ursprünglichen Lichtstrahls (insbesondere eine Laserfrequenz) selbst zur Überlagerung genutzt, kann die Sensoreinrichtung als Laserinterferometer fungieren, bei dem die relative Änderung bei Verschiebung des als Ziel dienenden nächstgelegenen Lagerguts im Aufnahmebereich oder eines Referenzspiegels ermittelt wird.

Bei einer mittels Triangulation fungierenden Sensoreinrichtung kann ein von der Sensoreinrichtung ausgesandter Lichtstrahl (zum Beispiel ein Laserstrahl oder Strahlung einer Leuchtdiode) auf ein nächstgelegenes Lagergut im Aufnahmebereich gerichtet werden und mit einer optischen Detektionseinheit der Sensoreinrichtung (zum Beispiel eine ortsauflösende Photodiode, eine CCD-Zeile oder eine Kamera) beobachtet. Ändert sich die Entfernung des nächstgelegenen Lagerguts von der Sensoreinrichtung, ändert sich auch der Winkel, unter dem der Lichtpunkt beobachtet wird und damit die Position seines Abbildes an der Detektionseinheit. Aus der Positionsänderung kann mit Hilfe von Winkelfunktionen die Entfernung des Lagerguts von der Sensoreinrichtung ermittelt werden.

Gemäß einem Ausführungsbeispiel kann jede der Sensoreinrichtungen zum Erfassen von Sensorinformation im Rahmen der optischen Abstandsmessung eingerichtet sein, wobei die Sensorinformation für einen quantitativen Abstand zwischen einer jeweiligen Sensoreinrichtung und einem nächstgelegenen Lagergut in dem jeweils zugeordneten Aufnahmebereich indikativ ist. Nach quantitativer Ermittlung dieses Abstands (zum Beispiel in Zentimetern oder Millimetern) kann bei vorbekannter räumliche Dimension des Lagerguts dieses Aufnahmebereichs (zum Beispiel ermittelbar durch Zugriff auf eine entsprechende Datenbank) eine Fehlmenge oder ein Rest-Füllstand dieser Lagergüter in diesem Aufnahmebereich ermittelt werden.

Gemäß einem Ausführungsbeispiel kann das Erfassmodul oder die Lagervorrichtung mindestens eine (zum Beispiel an und/oder in dem Trägerkörper angebrachte) Bildaufnahmeeinrichtung zum Aufnehmen von Bilddaten zum Identifizieren von zumindest einem Teil des Lagerguts in den Aufnahmebereichen aufweisen, die den Sensoreinrichtungen zugeordnet sind. Eine solche Bildaufnahmeeinrichtung kann zum Beispiel ein Bild der Lagergüter (zum Beispiel eine Produktverpackung) aufnehmen und basierend auf der dort enthaltenen und optisch detektierten Information eine Identifizierung der Lagergüter vornehmen oder zumindest eine Produktart ermitteln. Dies kann beispielsweise durch Methoden der optischen Bilderkennung erfolgen. Optional kann dies auch durch einen Abgleich der ermittelten Informationen mit Informationen aus einer Datenbank erfolgen. Die besagte Bildaufnahmeeinrichtung kann zum Beispiel für mehrere oder sogar alle Sensoreinrichtungen eines Erfassmoduls gemeinsam vorgesehen werden. Alternativ kann eine solche Bildaufnahmeeinrichtung auch für mehrere Erfassmodule gemeinsam vorgesehen sein, zum Beispiel für eine gesamte Lagervorrichtung. Es ist alternativ aber auch möglich, eine Bildaufnahmeeinrichtung pro Sensoreinrichtung zu implementieren.

Gemäß einem Ausführungsbeispiel kann das Erfassmodul einen elektrischen Energieversorgungsanschluss zum Versorgen der Sensoreinrichtungen, und optional einer Steuereinrichtung, mit elektrischer Energie aufweisen. Zum Beispiel kann ein Erfassmodul mit einem Kabel versehen sein, an dessen Ende ein Stromstecker zum Einstecken in das öffentliche Stromnetz befindlich ist.

Gemäß einem Ausführungsbeispiel können die Aufnahmebereiche derart ausgebildet sein, dass deren Oberseite zum Aufnehmen des Lagerguts gegenüber der Horizontalen geneigt ist, insbesondere zu einem Benutzer hin abfallend geneigt ist, sodass das Lagergut zu einer Vorderseite des jeweiligen Aufnahmebereichs vorrutscht. Beispielsweise kann ein Neigungswinkel zwischen 3° und 30° betragen. Unterstützt durch die Gravitationskraft wird das Lagergut dann durch die Neigung eines Regalbodens oder dergleichen dazu gebracht, zu der Vorderseite des Aufnahmebereichs vor zu rutschen. Hinter den verbleibenden Lagergütern kann dann mittels der Abstandsmessung eine Fehlmenge und somit auch eine Restmenge der Lagergüter in diesem Aufnahmebereich bestimmt werden, ohne dass ein menschlicher Benutzereingriff erforderlich ist.

Gemäß einem Ausführungsbeispiel können alternativ oder ergänzend die Aufnahmebereiche mit Fördereinrichtungen (insbesondere Rollen- und/oder Kugellagern) zum Fördern einer Bewegung des Lagerguts hin zu einer Vorderseite des jeweiligen Aufnahmebereichs ausgebildet sein. Durch das Vorsehen von Rollen- und/oder Kugellagern in einem (vorzugsweise darüber hinaus schräg geneigten) Regalboden kann ein reibungsarmes Gleiten verbleibende Lagergüter (zum Beispiel nach Entnahme eines vordersten Lagerguts) dazu bringen, selbsttätig nach vorne durch zu rutschen. Eine optische Abstandsmessung hinter den nach vorne rutschenden Lagergütern kann dadurch mit hoher Genauigkeit einen Fehlbestand bzw. Restbestand von Lagergütern in einem bestimmten Aufnahmebereich liefern,

Gemäß einem Ausführungsbeispiel können alternativ oder ergänzend die Aufnahmebereiche einen anderen Mechanismus, insbesondere einen Federmechanismus, zum Drängen des Lagerguts zu einer Vorderseite des jeweiligen Aufnahmebereichs aufweisen. Von hinten nach vorne drückende mechanische Federn können somit bewirken, dass Lagergüter eines Aufnahmebereichs stets an einer vorderen (d.h. einem Benutzer zugewandten) Seite einer Lagervorrichtung befindlich sind. Auch diese Maßnahme verringert das Risiko einer Fehlbestimmung einer Fehlmenge und/oder einer Füllmenge von Lagergütern in einem Aufnahmebereich durch eine optische Abstandsmessung. Somit kann Lagergut in den Aufnahmebereichen von einer zugeordneten Sensoreinrichtung weg und hin zu einem Ende (insbesondere einem Anschlag an einem Ende) des jeweiligen Aufnahmebereichs gedrängt werden. Besagtes Ende kann einem der zugeordneten Sensoreinrichtung zugewandten anderen Ende des jeweiligen Aufnahmebereichs gegenüberliegen. Mit Vorteil kann das Drängen des Lagerguts von der zugeordneten Sensoreinrichtung weg durch einen selbsttätigen Mechanismus bewirkt werden. Ein solcher Mechanismus kann zum Beispiel ein auf der Gravitationskraft beruhender Mechanismus (zum Beispiel durch eine Neigung von Lagerplätzen), ein reibungsverringernder Mechanismus (zum Beispiel durch ein reibungsarmes Lager in einem die Lagergüter tragenden Boden) und/oder ein Federspannungsmechanismus (zum Beispiel durch eine mechanische Feder, die Lagergüter von der Sensoreinrichtung wegdrückt) sein. Insbesondere können mit Vorteil bei Entnehmen eines Teils der Lagergüter in einem Aufnahmebereich verbleibende Lagergüter in dem Aufnahmebereich von der zugeordneten Sensoreinrichtung weiter weg gedrängt werden, sodass der Entnahmevorgang von der zugeordneten Sensoreinrichtung mittels der optischen Abstandsmessung erfasst wird.

Gemäß einem Ausführungsbeispiel kann das mindestens eine Erfassmodul vertikal orientiert an den Montagestrukturen befestigt oder befestigbar sein. Bevorzugt kann ein Erfassmodul als vertikale Rückwand einer zum Beispiel als Regal ausgebildeten Lagervorrichtung montiert werden.

Das erste Erfassmodul und das zweite Erfassmodul sind vertikal übereinander angebracht, insbesondere das erste Erfassmodul vertikal über dem zweiten Erfassmodul, und/oder das erste Erfassmodul weist eine größere Dimension als das zweite Erfassmodul auf. Beide Erfassmodule können jeweils einen Teil einer Rückwand einer gemeinsamen Lagervorrichtung bilden. Zwischen den beiden vertikal orientierten Erfassmodulen ist eine kurze Verbindungsleitung ausreichend, um Sensorsignale der Sensoreinrichtungen des zweiten Erfassmoduls zu der Steuereinrichtung des ersten Erfassmoduls zu übertragen.

Die kompakte Ausgestaltung einer entsprechenden Lagervorrichtung kann weiter verbessert werden, in dem das zweite Erfassmodul ohne Steuereinrichtung mit einer geringeren Höhe ausgebildet wird als das erste Erfassmodul.

Gemäß einem Ausführungsbeispiel kann eine Steuereinrichtung eines Erfassmoduls mehrere Funktionen erfüllen. Zum einen kann die Steuereinrichtung zum Empfang von Sensordaten, Sensorsignalen bzw. Sensorinformation von den zugeordneten Sensoreinrichtungen ausgebildet sein. Optional kann die Steuereinrichtung zum Verarbeiten dieser Sensorinformation zum Ableiten des zu bestimmenden Abstands dienen. Es ist auch möglich, dass die Steuereinrichtung die Sensorinformation an eine Verwaltungseinrichtung übermittelt. Zu diesem Zweck kann die Steuereinrichtung mit einer Kommunikationseinheit zum Kommunizieren (insbesondere drahtlosen Kommunizieren) der Sensorinformation zu der Verwaltungseinrichtung ausgestattet sein. Die Sensoreinrichtung kann einstückig ausgebildet sein, d.h. als eine Komponente zum Bereitstellen zumindest eines Teils der genannten Funktionalität. Alternativ kann die Steuereinrichtung auch in unterschiedliche zusammenwirkende Komponenten aufgeteilt sein, zum Beispiel in eine Datenempfangskomponente und in eine Datenübermittlungskomponente.

Gemäß einem Ausführungsbeispiel kann zumindest ein Teil der Aufnahmebereiche durch Aufnahmeflächen eines gemeinsamen Lagerfachs ausgebildet sein. Anschaulich können die Aufnahmebereiche eines gemeinsamen Lagerfachs (zum Beispiel physisch oder virtuell unterteilte oder abgegrenzte) Lagerplätze einer gemeinsamen Regalbodens sein.

Gemäß einem Ausführungsbeispiel kann in der Verwaltungseinrichtung jedem Aufnahmebereich ein spezifisches Lagergut zugeordnet sein und abhängig von Sensorsignalen der zugehörigen Sensoreinrichtung das jeweilige spezifische Lagergut verwaltet werden. Insbesondere kann bedarfsweise eine Nachbestellung des jeweiligen spezifischen Lagerguts durchgeführt oder ausgelöst werden. Zum Beispiel kann eine Nachbestellung ausgelöst werden, wenn die durch die optische Abstandsmessung ermittelte Fehlmenge des Lagerguts in einem jeweiligen Aufnahmebereich einen vorgebbaren Schwellwert überschreitet. Welches Lagergut in einem bestimmten Aufnahmebereich gelagert ist oder zu lagern ist, kann zum Beispiel in einer Datenbank des Lagerverwaltungssystems abrufbar hinterlegt sein. Es ist aber alternativ oder ergänzend auch möglich, mittels einer Bildaufnahmeeinrichtung eines Erfassmoduls, einer Lagervorrichtung oder des Lagerverwaltungssystems Bildaufnahmen der Lagergüter zu machen und daraus die Information abzuleiten, welche Lagergüter in welchen Aufnahmebereich gelagert sind.

Gemäß einem Ausführungsbeispiel kann mit der optischen Abstandsmessung ein Abstand zwischen der jeweiligen Sensoreinrichtung und einem dieser Sensoreinrichtung am nächsten liegenden Lagergut erfasst werden. Basierend auf diesem Abstand kann eine Menge von fehlenden oder verbleibenden Lagergütern in dem dieser Sensoreinrichtung zugeordneten Aufnahmebereich ermittelt werden. Eine hierfür vorteilhafte Information hinsichtlich Dimensionen von Lagergütern und Dimensionen eines Aufnahmebereichs kann zum Beispiel vorbekannt sein, sensorisch vermessen werden oder in einer Datenbank hinterlegt sein.

Gemäß einem Ausführungsbeispiel kann bei Absinken einer Füllmenge eines jeweiligen Lagerguts unter einen vorgebbaren Schwellwert eine Nachbestellung des jeweiligen Lagerguts ausgelöst werden. Alternativ kann eine Nachbestellung des jeweiligen Lagerguts ausgelöst werden, wenn eine Fehlmenge des Lagerguts einen vorgebbaren Schwellwert überschreitet. Zum Beispiel ist der erstgenannte Schwellwert Null, sodass erst bei vollständiger Entleerung eines Aufnahmebereichs eine Nachbestellung ausgelöst wird. Mit Vorteil kann jedoch eine Nachbestellung bereits dann ausgelöst werden, wenn ein sensorisch ermittelter Restbestand in einem Aufnahmebereich unter einen vorgebbaren Schwellwert abgesunken ist bzw. eine sensorisch ermittelte Fehlmenge in einem Aufnahmebereich über einen vorgebbaren Schwellwert angestiegen ist. Der jeweilige Schwellwert kann zum Beispiel lagergutspezifisch bzw. aufnahmebereichspezifisch definiert werden. Insbesondere kann der jeweilige Schwellwert basierend auf historischen Verbrauchsraten bestimmter Lagergüter eingestellt werden. Wenn erfahrungsgemäß bestimmte Lagergüter schneller abverbraucht werden als andere, kann für die ersteren Lagergüter der Schwellwert betreffend die Nachbestellung bei Unterschreitung einer bestimmten Füllmenge höher gewählt werden als für die letzteren Lagergüter.

Im Folgenden werden exemplarische Ausführungsbeispiele der vorliegenden Erfindung mit Verweis auf die folgenden Figuren detailliert beschrieben.
Figur 1 zeigt ein Erfassmodul einer Lagervorrichtung gemäß einem exemplarischen Ausführungsbeispiel der Erfindung.
Figur 2 zeigt eine Lagervorrichtung mit Erfassmodulen gemäß einem exemplarischen Ausführungsbeispiel der Erfindung.
Figur 3 zeigt ein Lagerverwaltungssystem mit mehreren Lagervorrichtungen mit jeweils mehreren Erfassmodulen gemäß einem exemplarischen Ausführungsbeispiel der Erfindung.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem exemplarischen Ausführungsbeispiel der Erfindung kann ein intelligentes Überwachungssystem für den Lagergutbestand eines komplexen Warenlagers geschaffen werden, das Lagervorrichtungen (zum Beispiel Regale) mit diversen Aufnahmebereichen (zum Beispiel abgegrenzten Bereichen eines Lagerfachs, beispielsweise ein Regalboden) aufweist. Hierzu können beispielsweise Aufnahmebereiche eines Lagerfachs mit einem Erfassmodul ausgerüstet bzw. nachgerüstet werden, das mehrere vorzugsweise linear angeordnete Sensoreinrichtungen zum Ermitteln einer Fehlmenge bzw. Füllmenge von Lagergütern in jedem der Aufnahmebereiche aufweist. Mit Vorteil wird hierzu von jeder der Sensoreinrichtungen eine optische Abstandsmessung zum Ermitteln eines Abstands zwischen der Sensoreinrichtung und dem hintersten Lagergut einer Anzahl von in dem Aufnahmebereich hintereinander angeordneten Lagergütern durchgeführt. Der räumliche Abstand zwischen der Sensoreinrichtung und dem hintersten Lagergut in dem Aufnahmebereich erlaubt einen Rückschluss auf eine Fehlmenge bzw. eine verbleibende Füllmenge von Lagergütern in diesem Aufnahmebereich. Ist eine auf einer Reflexion von Licht an Lagergut beruhende Abstandsmessung aufgrund einer Entnahme des letzten Lagerguts aus einem Aufnahmebereich nicht mehr möglich, weil ein von der Sensoreinrichtung ausgesandter Lichtstrahl nicht mehr von dem hintersten Lagergut in dem Aufnahmebereich zu der Sensoreinrichtung zurückreflektiert werden kann, liefert dies die Information eines komplett entleerten Aufnahmebereichs.

Gemäß einem exemplarischen Ausführungsbeispiel kann mittels eines Lichtstrahls, insbesondere eines Laserlichtstrahls, ein Abstand zwischen einer den Lichtstrahl aussendenden Sensoreinrichtung und einem in einem zugeordneten Aufnahmebereich an hinterster Stelle angeordneten Lagergut ermittelt werden. Dadurch kann auch der Bestand an Lagergütern in diesem Aufnahmebereich ermittelt werden. Die Messung einer Fehlmenge bzw. einer Füllmenge mittels eines Lichtstrahls lässt die Lagergüter vollkommen unbeeinflusst, was zum Beispiel bei der Überwachung des Lagerbestands von Gefahrgut besonders vorteilhaft ist.

Anschaulich kann also mit einer austauschbaren Sensorplatte in Form des Erfassmoduls und der von den an der Sensorplatte angebrachten Sensoreinrichtungen durchgeführten Abstandsmessung eine beliebige Lagervorrichtung auf einfache Weise zum automatischen Überwachen ihres Füllstands mit Lagergut ausgerüstet oder nachgerüstet werden. Ein solches Erfassmodul bildet beispielsweise eine Rückwand für einen Regalboden einer als Regal ausgebildeten Lagervorrichtung. Ein solches wandförmiges Erfassmodul ist eigenständig und kann variabel von einer Lagervorrichtung zu einer anderen Lagervorrichtung versetzt werden. Daher ist auch mit Vorteil das Um- oder Nachrüsten eines Regals oder einer anderen Lagervorrichtung mit einem Erfassmodul zur automatischen Überwachung eines Befüllungsgrades mit Lagergütern möglich. Diese Überwachung kann als Basis für eine elektronische Nachbestellung von Lagergütern bei Absinken des Befüllungsgrades des zugehörigen Aufnahmebereichs mit Lagergütern unter einen kritischen Wert dienen.

Vorteilhaft kann in einer Datenbank hinterlegt sein, welches Lagergut (zum Beispiel Dosen mit Kontaktspray oder Kartons mit M8-Schrauben) in welchem Aufnahmebereich einer Lagervorrichtung (zum Beispiel in welchem Regalfach und in welchem Abteil des Regalfachs) gelagert wird. Der aus der Abstandsmessung ermittelte Fehlbestand und/oder Restfüllbestand eines bestimmten Aufnahmebereichs des Warenlagers kann dann mit der Information in der Datenbank abgeglichen werden, welche Art von Lagergütern in genau diesem Aufnahmebereich gelagert werden. Das Ergebnis dieses Abgleichs kann dann die Basis für eine Nachbestellung bilden, womit sichergestellt werden kann, dass durch das rechtzeitige Auslösen von Nachbestellungen ein Warenbestand des Warenlagers stets auf einem gewünschten Befüllungsgrad gehalten werden kann.

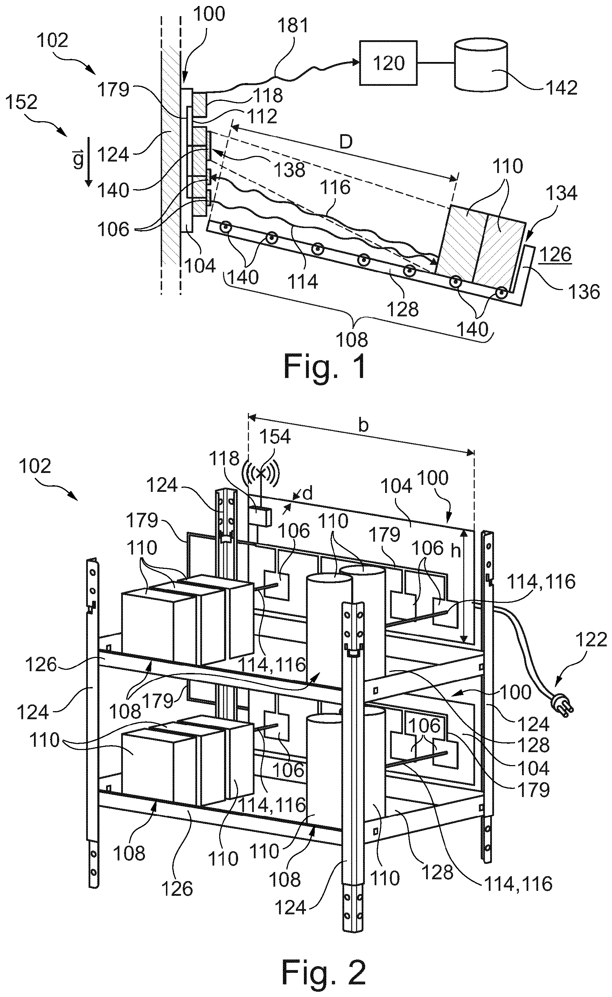

**Figur 1** zeigt eine Querschnittsansicht einer nur teilweise dargestellten und als Lagerregal ausgebildeten Lagervorrichtung 102 mit einem (zum Beispiel auswechselbaren oder nachrüstbaren) Erfassmodul 100 gemäß einem exemplarischen Ausführungsbeispiel der Erfindung.

Das Erfassmodul 100 ist an (beispielsweise vertikalen) Montagestrukturen 124 der Lagervorrichtung 102 befestigt, die als Regalstangen ausgebildet sein können. Das Erfassmodul 100 enthält einen plattenförmigen Trägerkörper 104, der zum Beispiel eine Metall- oder Kunststoffplatte sein kann. An dem Trägerkörper 104 sind zum Beispiel äquidistant und senkrecht zur Papierebene von Figur 1 eine Mehrzahl von Sensoreinrichtungen 106 angebracht (zum Beispiel in der in Figur 2 dargestellten Weise).

Jede der optischen Sensoreinrichtungen 106 dient zum optischen Erfassen von Sensorinformation mittels einer optischen Abstandsmessung. Mit dieser optischen Abstandsmessung wird ein Abstand D zwischen der jeweiligen Sensoreinrichtung 106 und einem nächstgelegenen Lagergut 110 in einem Aufnahmebereich 108 quantitativ gemessen. Ein jeweiliger Aufnahmebereich 108 ist einer jeweiligen Sensoreinrichtung 106 zugeordnet. Anschaulich kann mittels jeder der Sensoreinrichtungen 106 Sensorinformation erfasst werden, die für eine Fehlmenge bereits entnommener Lagergüter 110 indikativ ist. Anschaulich ist die Fehlmenge bereits entnommener Lagergüter 110 proportional zum Abstand D, da der Abstand D mit jeder Entnahme eines Lagerguts 110 entsprechend anwächst. Verbleibende Lagergüter 110 rutschen nämlich selbsttätig zur Vorderseite 126 des Aufnahmebereichs 108 nach (wie nachfolgend genauer beschrieben wird). Durch Bestimmung des Abstands D ist somit eine Fehlmenge von Lagergütern 110 und mittelbar auch eine verbleibende Füllmenge von Lagergütern 110 in einem einer jeweiligen Sensoreinrichtung 106 zugeordneten Aufnahmebereich 108 der Lagervorrichtung 102 ermittelbar. Die verbleibende Füllmenge kann aus der sensorisch detektierbaren und nachfolgend berechenbaren Fehlmenge ermittelt werden, wenn die Dimensionen des Aufnahmebereichs 108 bzw. der Lagergüter 110 vorbekannt ist. Beispielsweise können die Dimensionen der einzelnen Aufnahmebereiche 108 und der einzelnen Lagergüter 110 in einer Datenbank 142 abgelegt sein und hieraus bedarfsweise abgefragt werden. Zum Beispiel kann die optische Abstandsmessung mittels einer optischen Laufzeitmessung, einer optischen Phasenlagemessung und/oder mittels Lasertriangulation durchgeführt werden.

Die Sensoreinrichtungen 106 sind derart an dem Trägerkörper 104 angebracht, dass jede der Sensoreinrichtungen 106 ausgehend von derselben Hauptoberfläche 112 des Trägerkörpers 104 einen elektromagnetischen Primärstrahl 114 in Richtung der Lagergüter 110 eines zugeordneten Aufnahmebereichs 108 emittieren kann. Dies erfolgt über einen optischen Emitter der Sensoreinrichtung 106 zum Emittieren des elektromagnetischen Primärstrahls 114. Der optische Emitter kann zum Beispiel eine Laserdiode oder eine Leuchtdiode sein. Darüber hinaus ist jede der Sensoreinrichtungen 106 ausgebildet, einen von dem nächstgelegenen Lagergut 110 reflektierten elektromagnetischen Sekundärstrahl 116 in Reaktion auf das Emittieren des elektromagnetischen Primärstrahls 114 zu erfassen. Dies bewerkstelligt ein optischer Empfänger der jeweiligen Sensoreinrichtung 106, zum Beispiel eine Fotodiode.

Darüber hinaus kann für alle Sensoreinrichtungen 106 des Erfassmoduls 100 eine zum Beispiel als Prozessor ausgebildete gemeinsame Steuereinrichtung 118 vorgesehen sein, die mit allen Sensoreinrichtungen 106 des Erfassmoduls 100 kommunizierfähig gekoppelt sein kann. Die Steuereinrichtung 118 kann eingerichtet sein, basierend auf von den Sensoreinrichtungen 106 des Erfassmoduls 100 erfassten Sensordaten für jede der Sensoreinrichtungen 106 einen jeweiligen Abstand D zu jeweils zugeordnetem nächstliegenden Lagergut 110 und aus dem jeweiligen Abstand D eine jeweilige Fehlmenge und/oder Füllmenge von Lagergut 110 zu ermitteln. Besagte Fehlmenge und/oder Füllmenge kann dann einer zentralen Verwaltungseinrichtung 120 (zum Beispiel ebenfalls ausgebildet als Prozessor) übermittelt werden, beispielsweise als Basis für die Entscheidung über die Notwendigkeit und das Auslösen von Nachbestellungen. Alternativ ist es auch möglich, dass die Steuereinrichtung 118 die Sensorsignale der ihr zugeordneten Sensoreinrichtungen 106 empfängt und ohne Verarbeitung zur Weiterverarbeitung an die zentrale Verwaltungseinrichtung 120 übermittelt. Die Ermittlung von Abstand D bzw. einer Fehlmenge und/oder Füllmenge kann dann durch die Verwaltungseinrichtung 120 übernommen werden.

Bevorzugt kann die kommunizierfähige Kopplung der Steuereinrichtung 118 mit den Sensoreinrichtungen 106 das Erfassmoduls 100 drahtgebunden ausgebildet werden. Entsprechende elektrische Verbindungen 179 können durch elektrische Verbindungsleitungen an und/oder in dem Trägerkörper 104 realisiert werden. Ferner kann die Steuereinrichtung 118 mit der zentralen Verwaltungseinrichtung 120 ebenfalls kommunizierfähig gekoppelt sein, bevorzugt aber drahtlos, beispielsweise über WLAN oder Bluetooth. Besagte drahtlose Übermittlung ist in Figur 1 mit Bezugszeichen 181 dargestellt. Auf diese Weise kann die Kurzstreckenkommunikation drahtgebunden und die Langstreckenkommunikation drahtlos ausgebildet werden, was insgesamt zu einem geringen Aufwand im Zusammenhang mit der Datenübermittlung führt.

Figur 1 zeigt auch, dass an dem Trägerkörper 104 (alternativ getrennt von dem Trägerkörper 104) eine optische Bildaufnahmeeinrichtung 140 (zum Beispiel eine CCD-Kamera oder eine CMOS-Kamera) zum Aufnehmen von Bilddaten angebracht sein kann. Zum Beispiel kann die optische Bildaufnahmeeinrichtung 140 gemeinsam für alle Sensoreinrichtungen 106 des Erfassmoduls 100 vorgesehen sein. Mit von der optischen Bildaufnahmeeinrichtung 140 aufgenommenen Bildern der Rückseiten der in den Aufnahmebereichen 108 gelagerten Lagergüter 110 können diese beispielsweise identifiziert werden. Auf diese Weise kann mit besonders geringem Aufwand sichergestellt werden, dass sich eine ermittelte Fehlmenge bzw. Füllmenge auf die richtigen Lagergüter 110 bezieht. Alternativ kann der Typ einer Lagerguts 110 in einem Aufnahmebereich 108 auch Datenbank 142 entnommen werden, auf welche zum Beispiel die zentrale Verwaltungseinrichtung 120 zugreifen kann.

Figur 1 zeigt noch, dass der dargestellte Aufnahmebereich 108 durch ein Lagerfach 128 abgegrenzt ist. Die Oberseite des Lagerfachs 128 bzw. des Aufnahmebereichs 108 ist zum Aufnehmen des Lagerguts 110 gegenüber der Horizontalen um einen spitzen Winkel geneigt und zu einem Benutzer an einer Vorderseite 126 der Lagervorrichtung 102 hin abfallend ausgebildet. Unterstützt durch die Gravitationskraft (siehe den g-Vektor 152) rutscht somit beim Entnehmen eines Lagerguts 110 an der Vorderseite 126 verbleibendes Lagergut 110 zu der Vorderseite 126 des jeweiligen Aufnahmebereichs 108 nach. Auf diese Weise grenzt verbleibendes Lagergut 110 in einem Aufnahmebereich 108 immer an einen vorderseitigen Anschlag 136 an, sodass der mittels der optischen Abstandsmessung erfassbare Abstand D ein Maß für einen Fehlbestand an Lagergütern 110 ist, der wiederum einen Rückschluss auf eine verbleibende Menge von Lagergütern 110 in dem Aufnahmebereich 108 liefert. Um aus dem Abstand D die verbleibende Menge von Lagergütern 110 zu ermitteln, können Dimensionsangaben des Aufnahmebereichs 108 und/oder der Lagergüter 110 auch der zentralen Datenbank 142 entnommen werden. Um das gravitationsgestützte Positionieren von Lagergütern an der Vorderseite 126 zusätzlich zu unterstützen, ist gemäß Figur 1 der Aufnahmebereich 108 mit einer Fördereinrichtung 140 in Form von Rollen- oder Kugellagern versehen. Die Fördereinrichtung 140 kann rein passiv arbeiten, oder unterstützt mittels eines Antriebs (zum Beispiel ein Elektromotor). Die Fördereinrichtung 140 fördert zusätzlich eine Bewegung des Lagerguts 110 hin zu der Vorderseite 126 des jeweiligen Aufnahmebereichs 108 und bewirkt dadurch eine hohe Fehlerrobustheit und Zuverlässigkeit des ermittelten Füllstands.

Somit ist sichergestellt, dass Lagergut 110 in einem jeweiligen Aufnahmebereich 108 von einer zugeordneten Sensoreinrichtung 106 weg hin zu dem Anschlag 136 an einem Ende 134 des Aufnahmebereichs 108 gedrängt wird, das einem der besagten Sensoreinrichtung 106 zugewandten anderen Ende 138 des jeweiligen Aufnahmebereichs 108 gegenüberliegt.

**Figur 2** zeigt eine Lagervorrichtung 102 mit Erfassmodulen 100 gemäß einem exemplarischen Ausführungsbeispiel der Erfindung.

Die Lagervorrichtung 102 weist Montagestrukturen 124 zum Montieren der Erfassmodule 100 auf.

Lagerplätze oder Aufnahmebereiche 108 sind zum Aufnehmen von spezifisch zugeordnetem Lagergütern 110 ausgebildet. Jede Sensoreinrichtung 106 eines jeweiligen Erfassmoduls 100 ist einem jeweiligen Aufnahmebereich 108 zugeordnet und dient zum Erfassen der für eine Fehlmenge bzw. Füllmenge von Lagergütern 110 in einem jeweils zugeordneten Aufnahmebereich 108 indikativen Information, wie bezugnehmend auf Figur 1 beschrieben.

Das gemäß Figur 2 oberste Erfassmodul 100 kann ausgebildet sein, wie gemäß Figur 1 beschrieben und ist insbesondere mit der Steuereinrichtung 118 zum Empfangen der Sensorsignale aller Sensoreinrichtungen 106 des obersten Erfassmoduls 100 ausgebildet. Gemäß Figur 2 ist zusätzlich ein unteres zweites Erfassmodul 100 vorgesehen, das hinsichtlich der Ausgestaltung der Sensoreinrichtungen 106 ausgebildet sein kann wie in Figur 1 beschrieben. Allerdings weist das untere zweite Erfassmodul 100 keine eigene Steuereinrichtung 118 auf. Stattdessen ist das zweite Erfassmodul 100 über eine vorzugsweise drahtgebundene Kommunikationsverbindung (siehe elektrische Verbindungen 179) mit der Steuereinrichtung 118 des ersten Erfassmoduls 100 kommunizierfähig gekoppelt. Die Kommunikation zwischen dem ersten Erfassmodul 100 und dem zweiten Erfassmodul 100 erfolgt mittels einer Master-Slave-Kommunikationsverbindung, bei das erste Erfassmodul 100 mit seiner Steuereinrichtung 118 als Master und das zweite Erfassmodul 100 ohne Steuereinrichtung als Slave fungiert. Die Steuereinrichtung 118 des ersten Erfassmoduls 100 kann daher auch die Sensorsignale der Sensoreinrichtungen 106 des zweiten Erfassmoduls 100 empfangen und mittels einer in Figur 2 mit Bezugszeichen 154 dargestellten drahtlosen Kommunikation an eine zentrale Verwaltungseinrichtung 120 übermitteln (nicht gezeigt in Figur 2).

Wie gezeigt, sind das plattenförmige erste Erfassmodul 100 und das plattenförmige zweite Erfassmodul 100 vertikal übereinander angebracht und bilden Rückwände der Lagervorrichtung 102. Genauer gesagt ist das erste Erfassmodul 100 vertikal über dem zweiten Erfassmodul 100 angeordnet. Zum Beispiel kann die Trägerplatte 104 des ersten Erfassmoduls 100 eine Breite b von 1000 mm, eine Höhe h von zum Beispiel 140 mm und eine Dicke d von zum Beispiel 10 mm aufweisen. Das zweite Erfassmodul 100 kann eine geringere Höhe von zum Beispiel 90 mm, aber dieselbe Breite und dieselbe Dicke wie das erste Erfassmodul 100 haben. Die geringeren Dimensionen des zweiten Erfassmoduls 100 gegenüber dem ersten Erfassmodul 100 beruhen auf der geringeren Funktionalität und dem folglich geringeren Platzbedarf der Komponenten des zweiten Erfassmoduls 100, insbesondere aufgrund des Fehlens einer eigenen Steuereinrichtung in dem zweiten Erfassmodul 100.

Ferner ist in Figur 2 gezeigt, dass das erste Erfassmodul 100 einen elektrischen Energieversorgungsanschluss 122 zum Versorgen der Sensoreinrichtungen 106 und seiner Steuereinrichtung 118 mit elektrischer Energie aufweist. Der elektrische Energieversorgungsanschluss 122 kann ein Stromkabel und einen Stecker zum Anschließen an das öffentliche Stromnetz aufweisen. Über seinen elektrischen Energieversorgungsanschluss 122 kann das erste Erfassmodul 100 gemäß einem Ausführungsbeispiel auch das zweite Erfassmodul 100 mit elektrischer Energie versorgen. Alternativ kann auch das zweite Erfassmodul 100 mit einem elektrischen Energieversorgungsanschluss (nicht dargestellt) ausgestattet sein.

Wie ebenfalls in Figur 2 dargestellt, sind Aufnahmebereiche 108 eines jeweiligen Erfassmoduls 100 durch Aufnahmeflächen eines gemeinsamen Lagerfachs 128 oder Regalbodens ausgebildet. Dabei ist jeweils ein Teil der Aufnahmebereiche 108 teilweise mit Lagergut 110 bestückt, hier ausgebildet durch quaderförmige bzw. kreiszylindrische Warenbehälter.

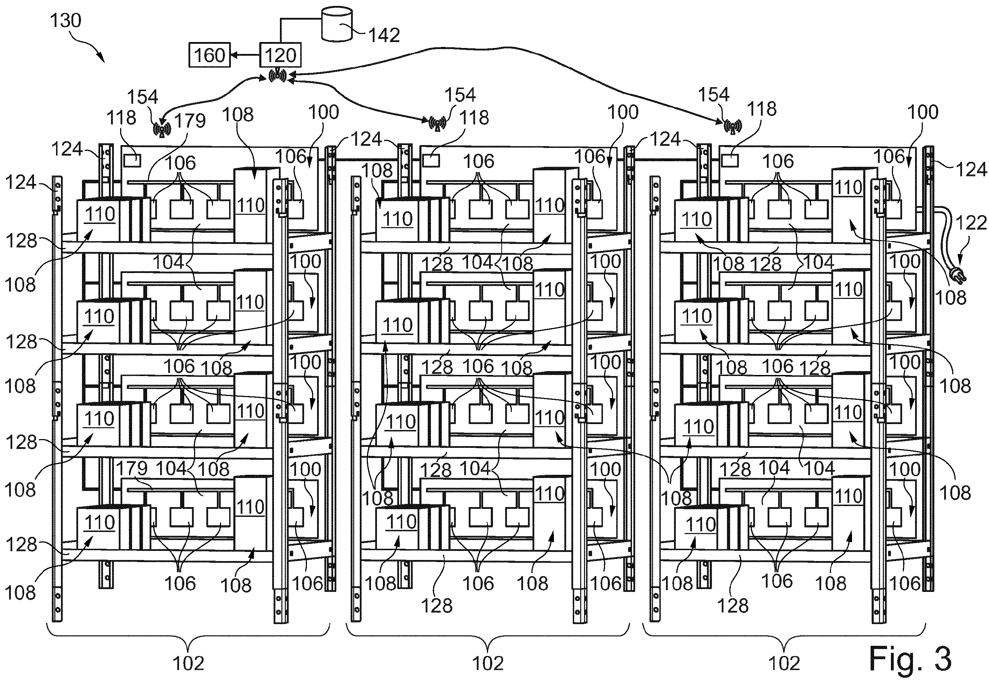

**Figur 3** zeigt ein Lagerverwaltungssystem 130 mit drei Lagervorrichtungen 102 gemäß einem exemplarischen Ausführungsbeispiel der Erfindung.

Jede der Lagervorrichtungen 102 ist mit vier Erfassmodulen 100 ausgestattet. Das jeweils oberste Erfassmodul 100 jeder Lagervorrichtung 102 hat eine Steuereinrichtung 118 und dient als Master, wohingegen die jeweils drei unteren Erfassmodule 100 jeder Lagervorrichtung 102 von der Steuereinrichtung 118 des obersten Erfassmoduls 100 gesteuert werden und als Slaves fungieren.

Das dargestellte Lagerverwaltungssystem 130 enthält also mehrere kommunizierfähig gekoppelte Lagervorrichtungen 102 der Funktionalität gemäß Figur 1 oder Figur 2. Allerdings ist jede der Lagervorrichtungen 102 komplexer ausgebildet als gemäß Figur 1 oder Figur 2, d.h. mit mehr Erfassmodulen 100, mehr Aufnahmebereichen 108 und mehr Kommunikationsverbindungen. Die als Server oder dergleichen ausgebildete Verwaltungseinrichtung 120 wird von den Steuereinrichtungen 118 der jeweiligen Lagervorrichtungen 102 drahtlos mit den Sensorsignalen der den einzelnen Aufnahmebereichen 108 und zugehörigen Lagergütern 110 zugeordneten Sensoreinrichtungen 106 versorgt. Die Verwaltungseinrichtung 120, gegebenenfalls unter Zugriff auf Daten in Datenbank 142, ermittelt dann basierend auf den Sensorsignalen der Sensoreinrichtungen 106 einen Bestand der einzelnen Lagergüter 110 in den einzelnen Aufnahmebereichen 108 und verwaltet diesen entsprechend. In der Verwaltungseinrichtung 120 ist jedem Aufnahmebereich 108 ein spezifisches Lagergut 110 zugeordnet. Ferner wird abhängig von Sensorsignalen der zugehörigen Sensoreinrichtung 106 das jeweilige spezifische Lagergut 110 verwaltet. Zum Beispiel wird bedarfsweise eine Nachbestellung des jeweiligen spezifischen Lagerguts 110 bei einer über ein Kommunikationsnetzwerk gekoppelten Nachbestelleinrichtung 160 durchgeführt oder ausgelöst. Die Nachbestellung eines bestimmten Lagerguts 110 kann insbesondere dann von der Verwaltungseinrichtung 120 durch eine entsprechende Kommunikationsnachricht an die Nachbestelleinrichtung 160 ausgelöst werden, wenn nach Ermittlung eine Fehlmenge und/oder einer Füllmenge in einem diesem Lagergut 110 zugeordneten Aufnahmebereich 108 basierend auf der oben beschriebenen optischen Abstandsmessung ermittelt worden ist, dass der dortige Füllstand unter einen kritischen Schwellwert abgesunken ist. Dadurch kann sichergestellt werden, dass Nachschub rechtzeitig eintrifft und in dem zugeordneten Aufnahmebereich 108 nachgefüllt werden kann.

Ein besonderer Vorteil von Ausführungsbeispielen der Erfindung kann darin gesehen werden, dass die austauschbaren oder beliebig anbaubaren Erfassmodule 100 in einfacher Weise zum Nachrüsten einer herkömmlichen Lagervorrichtung ohne Warenbestandsüberwachung eingesetzt werden kann. Hierfür ist es in einfacher Weise möglich, zum Beispiel als Regalstangen ausgebildete Montagestrukturen 124 der herkömmlichen Lagervorrichtung mit einem oder mehreren oben beschriebenen Erfassmodulen 100 nachzurüsten. Ein aufwendiger Umbau der Lagervorrichtung ist hierfür nicht erforderlich.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Lagervorrichtung (102), aufweisend
Montagestrukturen (124), insbesondere Regalstangen, zum, insbesondere austauschbaren oder nachrüstenden, Montieren von Erfassmodulen (100);
die Erfassmodule (100), die an den Montagestrukturen (124) montiert oder montierbar sind; und
eine Mehrzahl von Aufnahmebereichen (108), von denen jeder zum Aufnehmen von Lagergut (110) ausgebildet ist;
wobei jede Sensoreinrichtung (106) des mindestens einen Erfassmoduls (100) einem jeweiligen Aufnahmebereich (108) zugeordnet ist und zum Erfassen der für die Fehlmenge und/oder die Füllmenge von Lagergut (110) in dem jeweils zugeordneten Aufnahmebereich (108) indikativen Sensorinformation ausgebildet ist;
wobei die Erfassmodule (100) zum, insbesondere austauschbaren oder nachrüstenden, Montieren an einer Lagervorrichtung (102), konfiguriert sind und Folgendes aufweisen:
einen Trägerkörper (104); und
eine Mehrzahl von Sensoreinrichtungen (106), die an und/oder in dem Trägerkörper (104) angebracht sind; wobei
jede der Sensoreinrichtungen (106) zum Erfassen von Sensorinformation im Rahmen einer optischen Abstandsmessung eingerichtet ist, welche Sensorinformation für eine Fehlmenge und/oder eine Füllmenge von Lagergut (110) in einem einer jeweiligen Sensoreinrichtung (106) zugeordneten Aufnahmebereich (108) der Lagervorrichtung (102) zum Aufnehmen von Lagergut (110) indikativ ist; und
die Sensoreinrichtungen (106) derart an dem Trägerkörper (104) angebracht sind, dass jede der Sensoreinrichtungen (106) ausgehend von derselben Hauptoberfläche (112) des Trägerkörpers (104) parallel zueinander einen elektromagnetischen Primärstrahl (114) emittieren kann, insbesondere geneigt oder senkrecht zu der Hauptoberfläche (112) des Trägerkörpers (104), wobei jede der Sensoreinrichtungen (106) ausgebildet ist, einen von dem Lagergut (110) reflektierten elektromagnetischen Sekundärstrahl (116) in Reaktion auf das Emittieren des elektromagnetischen Primärstrahls (114) zu erfassen,
**dadurch gekennzeichnet, dass**
die Erfassmodule (100) ein erstes Erfassmodul (100) mit einer Steuereinrichtung (118) und ein zweites Erfassmodul (100) ohne eigene Steuereinrichtung aufweisen, das mittels der Steuereinrichtung (118) des ersten Erfassmoduls (100) steuerbar ist; und
die Lagervorrichtung (102) zumindest eines der folgenden Merkmale aufweist:
wobei das erste Erfassmodul (100) und das zweite Erfassmodul (100) vertikal übereinander angebracht sind, insbesondere das erste Erfassmodul (100) vertikal über dem zweiten Erfassmodul (100) angebracht ist;
wobei das erste Erfassmodul (100) eine größere Dimension aufweist als das zweite Erfassmodul (100).

2. Lagervorrichtung (102)) gemäß Anspruch 1, wobei der Trägerkörper (104) als Trägerplatte ausgebildet ist, aufweisend zumindest eines der folgenden Merkmale:
wobei die Trägerplatte eine Breite (b) von mindestens 500 mm aufweist;
wobei die Trägerplatte eine Höhe (h) von weniger als 150 mm, insbesondere von weniger als 100 mm, aufweist; und/oder
wobei die Trägerplatte eine Dicke (d) von weniger als 20 mm aufweist.

3. Lagervorrichtung (102)) gemäß einem der Ansprüche 1 bis 2, aufweisend die Steuereinrichtung (118), die eingerichtet ist:
die von den Sensoreinrichtungen (106) des Erfassmoduls (100) erfasste Sensorinformation zu empfangen und zur Weiterverarbeitung an eine Verwaltungseinrichtung (120) zu übermitteln; oder
basierend auf von den Sensoreinrichtungen (106) des Erfassmoduls (100) erfasster Sensorinformation für jede der Sensoreinrichtungen (106) einen jeweiligen Abstand (D) zu jeweils zugeordnetem Lagergut (110) und aus dem jeweiligen Abstand (D) die jeweilige Fehlmenge und/oder Füllmenge zu ermitteln.

4. Lagervorrichtung (102)) gemäß Anspruch 3, aufweisend zumindest eines der folgenden Merkmale:
wobei die Steuereinrichtung (118) eingerichtet ist, die von Sensoreinrichtungen (106) eines anderen Erfassmoduls (100), insbesondere des zweiten Erfassmoduls (100) ohne eigene Steuereinrichtung, erfasste Sensorinformation zu empfangen und zur Weiterverarbeitung an eine Verwaltungseinrichtung (120) zu übermitteln;
wobei die Steuereinrichtung (118) eingerichtet ist, basierend auf von Sensoreinrichtungen (106) eines mit der Steuereinrichtung (118) kommunizierfähig koppelbaren oder gekoppelten anderen Erfassmoduls (100), insbesondere des zweiten Erfassmoduls (100) ohne eigene Steuereinrichtung, erfassten Sensorinformation für die Sensoreinrichtungen (106) des anderen Erfassmoduls (100) einen jeweiligen Abstand (D) zu jeweils zugeordnetem Lagergut (110) und aus dem jeweiligen Abstand (D) die jeweilige Fehlmenge und/oder Füllmenge zu ermitteln;
wobei die Steuereinrichtung (118) mit den Sensoreinrichtungen (106) kommunizierfähig gekoppelt ist, insbesondere drahtgebunden kommunizierfähig gekoppelt ist;
wobei die Steuereinrichtung (118) mit einer Verwaltungseinrichtung (120), drahtlos, insbesondere über WLAN oder Bluetooth, kommunizierfähig koppelbar oder gekoppelt ist.

5. Lagervorrichtung (102)) gemäß einem der Ansprüche 1 bis 4, aufweisend zumindest eines der folgenden Merkmale:
wobei das zweite Erfassmodul (100) kommunizierfähig, insbesondere über eine Master-Slave-Kommunikationsverbindung, mit der von dem ersten Erfassmodul (100) extern vorgesehenen Steuereinrichtung (118) koppelbar ist und ausgebildet ist, von den Sensoreinrichtungen (106) erfasste Sensorinformation der externen Steuereinrichtung (118) zu übermitteln, insbesondere zur Ermittlung der Fehlmenge und/oder Füllmenge durch die Steuereinrichtung (118) und/oder eine mit der Steuereinrichtung (118) kommunizierfähig koppelbare oder gekoppelte Verwaltungseinrichtung (120);
wobei jede der Sensoreinrichtungen (106) ausgebildet ist, im Rahmen der optischen Abstandsmessung einen Abstand (D) zu Füllgut (110) des zugeordneten Aufnahmebereichs (108) mittels einer optischen Laufzeitmessung, einer optischen Phasenlagemessung und/oder Triangulation zu ermitteln;
wobei jede der Sensoreinrichtungen (106) zum Erfassen von Sensorinformation im Rahmen der optischen Abstandsmessung derart eingerichtet ist, dass die Sensorinformation für einen quantitativen Mindestabstand (D) zwischen einer jeweiligen Sensoreinrichtung (106) und einem nächstgelegenen Lagergut (110) in dem jeweils zugeordneten Aufnahmebereich (108) indikativ ist;
aufweisend mindestens eine an und/oder in dem Trägerkörper (104) angebrachte Bildaufnahmeeinrichtung (140) zum Aufnehmen von Bilddaten zum Identifizieren von zumindest einem Teil des Lagerguts (110) in den Aufnahmebereichen (108), die den Sensoreinrichtungen (106) zugeordnet sind.

6. Lagervorrichtung (102) gemäß einem der Ansprüche 1 bis 5, aufweisend zumindest eines der folgenden Merkmale:
ausgebildet als Lagerregal oder Lagerschrank;
wobei die Aufnahmebereiche (108) derart ausgebildet sind, dass deren Oberseite zum Aufnehmen des Lagerguts (110) gegenüber einer Horizontalen geneigt ist, insbesondere zu einem Benutzer hin abfallend geneigt ist, sodass das Lagergut (110) zu einer Vorderseite (126) des jeweiligen Aufnahmebereichs (108) vorrutscht;
wobei die Aufnahmebereiche (108) mit Fördereinrichtungen (140), insbesondere Rollen- und/oder Kugellagern, zum Fördern einer Bewegung des Lagerguts (110) hin zu einer Vorderseite (126) des jeweiligen Aufnahmebereichs (108) ausgebildet sind;
wobei die Aufnahmebereiche (108) einen Mechanismus, insbesondere einen Federmechanismus, zum Drängen des Lagerguts (110) zu einer Vorderseite (126) des jeweiligen Aufnahmebereichs (108) aufweisen;
wobei zumindest das erste oder zweite Erfassmodul (100) als, insbesondere vertikale, Rückwand an den Montagestrukturen (124) montiert oder montierbar ist;
wobei zumindest ein Teil der Aufnahmebereiche (108) durch unterschiedliche Aufnahmeflächen eines gemeinsamen Lagerfachs (128) ausgebildet ist;
wobei zumindest ein Teil der Aufnahmebereiche (108) zumindest teilweise mit Lagergut (110) bestückt ist, insbesondere in Form von Lagerboxen, Warenbehältern und/oder Schüttgut.

7. Lagerverwaltungssystem (130), aufweisend:
eine Mehrzahl von Lagervorrichtungen (102) gemäß einem der Ansprüche 1 bis 6;
eine Verwaltungseinrichtung (120), die eingerichtet ist, basierend auf der von den Sensoreinrichtungen (106) erfassten Sensorinformation einen Bestand von Lagergut (110) in den Aufnahmebereichen (108) der Lagervorrichtungen (102) zu verwalten.

8. Lagerverwaltungssystem (130) gemäß Anspruch 7, wobei in der Verwaltungseinrichtung (120) jedem Aufnahmebereich (108) ein spezifisches Lagergut (110) zugeordnet ist und abhängig von Sensorinformation der zugehörigen Sensoreinrichtung (106) das jeweilige spezifische Lagergut (110) verwaltet wird, insbesondere bedarfsweise eine Nachbestellung des jeweiligen spezifischen Lagerguts (110) durchgeführt oder ausgelöst wird, weiter insbesondere wenn die Fehlmenge des Lagerguts (110) in einem jeweiligen Aufnahmebereich (108) einen vorgebbaren Schwellwert überschreitet oder wenn die Füllmenge des Lagerguts (110) in einem jeweiligen Aufnahmebereich (108) einem vorgebbaren Schwellwert unterschreitet.

9. Verfahren zum Nachrüsten einer Aufnahmebereiche (108) zum Aufnehmen von Lagergut (110) aufweisenden Lagervorrichtung (102) gemäß einem der Ansprüche 1 bis 6, wobei das Verfahren aufweist:
Montieren des ersten und zweiten Erfassmoduls (100) an Montagestrukturen (124), insbesondere Regalstangen, der Lagervorrichtung (102);
Durchführen einer optischen Abstandsmessung mittels einer jeweiligen, einem jeweiligen Aufnahmebereich (108) zugeordneten Sensoreinrichtung (106) des mindestens einen Erfassmoduls (100) zum Erfassen der für eine Fehlmenge und/oder eine Füllmenge von Lagergut (110) in einem jeweils zugeordneten Aufnahmebereich (108) indikativen Sensorinformation; und
Überwachen des Bestands von Lagergut (110) der Lagervorrichtung (102) durch Auswertung der Sensorinformation.

10. Verfahren gemäß Anspruch 9, wobei das Verfahren ein Drängen von Lagergut (110) in den Aufnahmebereichen (108) von einer zugeordneten Sensoreinrichtung (106) weg hin zu einem Ende (134), insbesondere einem Anschlag (136) an einem Ende (134), des jeweiligen Aufnahmebereichs (108) aufweist, welches Ende (134) einem der zugeordneten Sensoreinrichtung (106) zugewandten anderen Ende (138) des jeweiligen Aufnahmebereichs (108) gegenüberliegt, wobei das Verfahren insbesondere ein Bewirken des Drängens des Lagerguts (110) von der zugeordneten Sensoreinrichtung (106) weg durch einen selbsttätigen Mechanismus aufweist, insbesondere einen gravitativen Mechanismus, einen reibungsverringernden Mechanismus und/oder einen Federvorspannungsmechanismus.

11. Verfahren gemäß Anspruch 10, wobei das Verfahren bei Entnehmen eines Teils des Lagerguts (110) von einer Vorderseite (126) eines Aufnahmebereichs (108) ein weiteres Drängen von verbleibendem Lagergut (110) in dem Aufnahmebereich (108) von der zugeordneten Sensoreinrichtung (106) weg aufweist, sodass das Entnehmen von der zugeordneten Sensoreinrichtung (106) mittels der optischen Abstandsmessung aufgrund eines durch das Entnehmen erhöhten Abstands (D) zwischen der Sensoreinrichtung (106) und dem verbleibenden Lagergut (110) erfasst wird.

12. Verfahren gemäß einem der Ansprüche 9 bis 11, wobei das Verfahren aufweist:
Ermitteln eines Abstands (D) zwischen der jeweiligen Sensoreinrichtung (106) und einem dieser Sensoreinrichtung (106) am nächsten liegenden Lagergut (110) mittels der optischen Abstandsmessung; und
Ermitteln der Fehlmenge und/oder einer Füllmenge von Lagergut (110) in dem dieser Sensoreinrichtung (106) zugeordneten Aufnahmebereich (108) basierend auf dem ermittelten Abstand (D).

13. Verfahren gemäß einem der Ansprüche 9 bis 12, wobei das Verfahren ein Auslösen einer Nachbestellung des jeweiligen Lagerguts (110) aufweist, wenn die Fehlmenge des jeweiligen Lagerguts (110) einen vorgebbaren Schwellwert überschreitet oder die Füllmenge des jeweiligen Lagerguts (110) einen vorgebbaren Schwellwert unterschreitet.

## Claims

1. Storage device (102), comprising
mounting structures (124), in particular shelf rods, for mounting, in particular exchangeably or retrofitting, detection modules (100);
the detection modules (100) which are mounted or can be mounted on the mounting structures (124); and
a plurality of receiving regions (108), each of which is designed to receive storage goods (110);
wherein each sensor device (106) of the at least one detection module (100) is assigned to a respective receiving region (108) and is designed to detect the sensor information which is indicative of the missing quantity and/or the filling quantity of storage goods (110) in the respectively assigned receiving region (108);
wherein the detection modules (100) are configured for mounting, in particular exchangeably or retrofitting, on a storage device (102) and comprise the following:
a carrier body (104); and
a plurality of sensor devices (106) which are mounted on and/or in the carrier body (104); wherein
each of the sensor devices (106) is set up to detect sensor information within the scope of an optical distance measurement, which sensor information is indicative of a missing quantity and/or a filling quantity of storage goods (110) in a receiving region (108), assigned to a respective sensor device (106), of the storage device (102) for receiving storage goods (110); and
the sensor devices (106) are mounted on the carrier body (104) in such a way that each of the sensor devices (106), proceeding from the same main surface (112) of the carrier body (104), can emit an electromagnetic primary beam (114) parallel to one another, in particular inclined or perpendicular to the main surface (112) of the carrier body (104), wherein each of the sensor devices (106) is designed to detect an electromagnetic secondary beam (116) reflected by the storage goods (110) in reaction to the emission of the electromagnetic primary beam (114),
**characterized in that**
the detection modules (100) comprise a first detection module (100) with a control device (118) and a second detection module (100) without its own control device, which can be controlled by means of the control device (118) of the first detection module (100); and
the storage device (102) comprises at least one of the following features:
wherein the first detection module (100) and the second detection module (100) are mounted vertically one above the other, in particular the first detection module (100) is mounted vertically above the second detection module (100);
wherein the first detection module (100) has a larger dimension than the second detection module (100).

2. Storage device (102) according to claim 1, wherein the carrier body (104) is formed as a carrier plate, comprising at least one of the following features:
wherein the carrier plate has a width (b) of at least 500 mm;
wherein the carrier plate has a height (h) of less than 150 mm, in particular of less than 100 mm; and/or
wherein the carrier plate has a thickness (d) of less than 20 mm.

3. Storage device (102) according to one of claims 1 to 2, comprising the control device (118), which is configured:
to receive the sensor information detected by the sensor devices (106) of the detection module (100) and to transmit it to a management device (120) for further processing; or
on the basis of sensor information detected by the sensor devices (106) of the detection module (100), to determine for each of the sensor devices (106) a respective distance (D) from respectively assigned storage goods (110) and from the respective distance (D) the respective missing quantity and/or filling quantity.

4. Storage device (102) according to claim 3, comprising at least one of the following features:
wherein the control device (118) is configured to receive the sensor information detected by sensor devices (106) of another detection module (100), in particular of the second detection module (100) without its own control device, and to transmit it to a management device (120) for further processing;
wherein the control device (118) is configured, on the basis of sensor information detected by sensor devices (106) of another detection module (100), in particular of the second detection module (100) without its own control device, which can be coupled or is coupled to the control device (118) in a communicable manner, to determine for the sensor devices (106) of the other detection module (100) a respective distance (D) from respectively assigned storage goods (110) and from the respective distance (D) the respective missing quantity and/or filling quantity;
wherein the control device (118) is coupled to the sensor devices (106) in a communicable manner, in particular is coupled in a communicable manner by wire;
wherein the control device (118) can be coupled or is coupled to a management device (120) in a communicable manner wirelessly, in particular via WLAN or Bluetooth.

5. Storage device (102) according to one of claims 1 to 4, comprising at least one of the following features:
wherein the second detection module (100) can be coupled to the control device (118) provided externally by the first detection module (100) in a communicable manner, in particular via a master-slave communication connection, and is designed to transmit sensor information detected by the sensor devices (106) to the external control device (118), in particular for determining the missing quantity and/or filling quantity by the control device (118) and/or a management device (120) which can be coupled or is coupled to the control device (118) in a communicable manner;
wherein each of the sensor devices (106) is designed, within the scope of the optical distance measurement, to determine a distance (D) from filling material (110) of the assigned receiving region (108) by means of an optical propagation time measurement, an optical phase position measurement and/or triangulation;
wherein each of the sensor devices (106) is set up to detect sensor information within the scope of the optical distance measurement in such a way that the sensor information is indicative of a quantitative minimum distance (D) between a respective sensor device (106) and a nearest storage goods (110) in the respectively assigned receiving region (108);
comprising at least one image recording device (140) mounted on and/or in the carrier body (104) for recording image data for identifying at least a part of the storage goods (110) in the receiving regions (108) which are assigned to the sensor devices (106).

6. Storage device (102) according to one of claims 1 to 5, comprising at least one of the following features:
designed as a storage shelf or storage cabinet;
wherein the receiving regions (108) are designed in such a way that their upper side for receiving the storage goods (110) is inclined with respect to a horizontal, in particular is inclined downwards towards a user, so that the storage goods (110) slide forwards to a front side (126) of the respective receiving region (108);
wherein the receiving regions (108) are designed with conveying devices (140), in particular roller and/or ball bearings, for conveying a movement of the storage goods (110) towards a front side (126) of the respective receiving region (108);
wherein the receiving regions (108) comprise a mechanism, in particular a spring mechanism, for forcing the storage goods (110) towards a front side (126) of the respective receiving region (108);
wherein at least the first or second detection module (100) is mounted or can be mounted as an, in particular vertical, rear wall on the mounting structures (124);
wherein at least a part of the receiving regions (108) is formed by different receiving surfaces of a common storage compartment (128);
wherein at least a part of the receiving regions (108) is at least partially equipped with storage goods (110), in particular in the form of storage boxes, goods containers and/or bulk goods.

7. Storage management system (130), comprising:
a plurality of storage devices (102) according to one of claims 1 to 6;
a management device (120), which is configured, on the basis of the sensor information detected by the sensor devices (106), to manage a stock of storage goods (110) in the receiving regions (108) of the storage devices (102).

8. Storage management system (130) according to claim 7, wherein in the management device (120) a specific storage goods (110) is assigned to each receiving region (108) and the respective specific storage goods (110) is managed on the basis of sensor information of the associated sensor device (106), in particular if necessary a reordering of the respective specific storage goods (110) is carried out or triggered, further in particular if the missing quantity of the storage goods (110) in a respective receiving region (108) exceeds a predefinable threshold value or if the filling quantity of the storage goods (110) in a respective receiving region (108) falls below a predefinable threshold value.

9. Method for retrofitting a storage device (102) according to one of claims 1 to 6, comprising receiving regions (108) for receiving storage goods (110), wherein the method comprises:
mounting the first and second detection module (100) on mounting structures (124), in particular shelf rods, of the storage device (102);
carrying out an optical distance measurement by means of a respective sensor device (106), assigned to a respective receiving region (108), of the at least one detection module (100) for detecting the sensor information which is indicative of a missing quantity and/or a filling quantity of storage goods (110) in a respectively assigned receiving region (108); and
monitoring the stock of storage goods (110) of the storage device (102) by evaluating the sensor information.

10. Method according to claim 9, wherein the method comprises forcing storage goods (110) in the receiving regions (108) away from an assigned sensor device (106) towards an end (134), in particular a stop (136) at an end (134), of the respective receiving region (108), which end (134) lies opposite an other end (138), facing the assigned sensor device (106), of the respective receiving region (108), wherein the method comprises in particular causing the storage goods (110) to be forced away from the assigned sensor device (106) by an automatic mechanism, in particular a gravity mechanism, a friction-reducing mechanism and/or a spring pretensioning mechanism.

11. Method according to claim 10, wherein the method comprises, when a part of the storage goods (110) is removed from a front side (126) of a receiving region (108), further forcing remaining storage goods (110) in the receiving region (108) away from the assigned sensor device (106), so that the removal from the assigned sensor device (106) is detected by means of the optical distance measurement on account of a distance (D), increased by the removal, between the sensor device (106) and the remaining storage goods (110).

12. Method according to one of claims 9 to 11, wherein the method comprises:
determining a distance (D) between the respective sensor device (106) and a storage goods (110) lying closest to this sensor device (106) by means of the optical distance measurement; and
determining the missing quantity and/or a filling quantity of storage goods (110) in the receiving region (108) assigned to this sensor device (106) on the basis of the determined distance (D).

13. Method according to one of claims 9 to 12, wherein the method comprises triggering a reordering of the respective storage goods (110) if the missing quantity of the respective storage goods (110) exceeds a predefinable threshold value or the filling quantity of the respective storage goods (110) falls below a predefinable threshold value.

## Revendications

1. Dispositif de stockage (102), présentant
des structures de montage (124), en particulier des barres d'étagères, destinées au montage, en particulier avec interchangeabilité ou possibilité de mise à niveau ultérieure, de modules d'enregistrement (100), ;
les modules d'enregistrement (100) qui sont montés ou peuvent être montés sur les structures de montage (124) ; et
une pluralité de régions de réception (108), conçue respectivement pour recevoir une marchandise stockée (110) ;
dans lequel chaque dispositif de capteur (106) du au moins un module d'enregistrement (100) est associé à une région de réception respective (108) et est conçu pour enregistrer des informations de capteur indicatives de la quantité manquante et/ou la quantité de remplissage de marchandise stockée (110) dans la région de réception (108) respectivement associée ;
dans lequel les modules d'enregistrement (100) sont configurés pour être montés, en particulier avec interchangeabilité ou possibilité de mise à niveau ultérieure, sur un dispositif de stockage (102) et présentent les caractéristiques ci-dessous :
un corps de support (104) ; et
une pluralité de dispositifs de capteur (106) qui sont mis en place sur et/ou dans le corps de support (104) ; dans lequel
chacun des dispositifs de capteur (106) est configuré pour enregistrer des informations de capteur dans le cadre d'une mesure optique de distance, lesquelles informations de capteur sont indicatives d'une quantité manquante et/ou d'une quantité de remplissage de marchandise stockée (110) dans une région de réception (108), associée à un dispositif de capteur (106) respectif, du dispositif de stockage (102) permettant de recevoir la marchandise stockée (110) ; et
les dispositifs de capteur (106) sont mis en place sur le corps de support (104) de telle manière que chacun des dispositifs de capteur (106) peut émettre un faisceau primaire électromagnétique (114) parallèlement aux autres à partir de la même surface principale (112) du corps de support (104), en particulier de manière inclinée ou perpendiculaire à la surface principale (112) du corps de support (104), dans lequel chacun des dispositifs de capteur (106) est conçu pour enregistrer un faisceau secondaire électromagnétique (116) réfléchi par la marchandise stockée (110) en réponse à l'émission du faisceau primaire électromagnétique (114),
**caractérisé en ce que**
les modules d'enregistrement (100) présentent un premier module d'enregistrement (100) comprenant un dispositif de commande (118) et un deuxième module d'enregistrement (100) sans dispositif de commande propre et pouvant être commandé au moyen du dispositif de commande (118) du premier module d'enregistrement (100) ; et
le dispositif de stockage (102) présente en au moins une des caractéristiques ci-dessous :
le premier module d'enregistrement (100) et le deuxième module d'enregistrement (100) sont mis en place de manière verticale l'un au-dessus de l'autre, en particulier le premier module d'enregistrement (100) est mis en place de manière verticale au-dessus du deuxième module d'enregistrement (100) ;
le premier module d'enregistrement (100) présente une dimension supérieure à celle du deuxième module d'enregistrement (100).

2. Dispositif de stockage (102) selon la revendication 1, dans lequel le corps de support (104) est réalisé sous la forme d'une plaque de support présentant au moins une des caractéristiques ci-dessous :
la plaque de support présente une largeur (b) d'au moins 500 mm ;
la plaque de support présente une hauteur (h) inférieure à 150 mm, en particulier inférieure à 100 mm ; et/ou
la plaque de support présente une épaisseur (d) inférieure à 20 mm.

3. Dispositif de stockage (102) selon l'une quelconque des revendications 1 à 2, présentant en outre le dispositif de commande (118) qui est conçu pour :
recevoir les informations de capteur enregistrées par les dispositifs de capteur (106) du module d'enregistrement (100) et les transmettre à un dispositif de gestion (120) en vue d'un traitement ultérieur ; ou
en se basant sur des informations de capteur enregistrée par les dispositifs de capteur (106) du module d'enregistrement (100), déterminer pour chacun des dispositifs de capteur (106) une distance (D) respective par rapport à la marchandise stockée (110) associée et, à partir de la distance (D) respective, la quantité manquante respective et/ou la quantité de remplissage respective.

4. Dispositif de stockage (102) selon la revendication 3, présentant au moins une des caractéristiques ci-dessous :
le dispositif de commande (118) est conçu pour recevoir les informations de capteur enregistrées par des dispositifs de capteur (106) d'un autre module d'enregistrement (100), en particulier du deuxième module d'enregistrement (100) sans dispositif de commande propre, et pour les transmettre à un dispositif de gestion (120) en vue d'un traitement ultérieur ;
le dispositif de commande (118) est conçu pour, en se basant sur des informations de capteur enregistrées par des dispositifs de capteur (106) d'un autre module d'enregistrement (100) pouvant être couplé ou couplé de manière à pouvoir communiquer avec le dispositif de commande (118), en particulier du deuxième module d'enregistrement (100) sans dispositif de commande propre, déterminer pour les dispositifs de capteur (106) de l'autre module d'enregistrement (100) une distance (D) respective par rapport à la marchandise stockée (110) respectivement associée et, à partir de la distance (D) respective, la quantité manquante et/ou la quantité de remplissage respective ;
le dispositif de commande (118) est couplé avec les dispositifs d'enregistrement (106) de manière à pouvoir communiquer, en particulier de manière à pouvoir communiquer par fil ;
le dispositif de commande (118) peut être couplé, ou est couplé, à un dispositif de gestion (120) de manière à pouvoir communiquer sans fil, en particulier par Wi-Fi ou Bluetooth.

5. Dispositif de stockage (102) selon l'une quelconque des revendications 1 à 4, présentant au moins une des caractéristiques ci-dessous :
le deuxième module d'enregistrement (100) peut être couplé de manière à pouvoir communiquer, en particulier par l'intermédiaire d'une liaison de communication maître-esclave, avec le dispositif de commande (118) fourni à l'extérieur par le premier module d'enregistrement (100) et est conçu pour transmettre au dispositif de commande externe (118) des informations de capteur enregistrées par les dispositifs de capteur (106), en particulier afin de déterminer la quantité manquante et/ou la quantité de remplissage grâce au dispositif de commande (118) et/ou à un dispositif de gestion (120) pouvant être couplé ou couplé avec le dispositif de commande (118) de manière à pouvoir communiquer ;
chacun des dispositifs de capteur (106) est conçu pour déterminer, dans le cadre de la mesure optique de distance, une distance (D) par rapport à la marchandise stockée (110) de la région de réception (108) associée au moyen d'une mesure optique de temps de propagation, d'une mesure optique de position de phase et/ou d'une triangulation ;
chacun des dispositifs de capteur (106) est conçu pour enregistrer des informations de capteur dans le cadre de la mesure optique de distance de telle manière que les informations de capteur sont indicatives d'une distance minimale quantitative (D) entre un dispositif de capteur (106) respectif et une marchandise stockée (110) la plus proche dans la région de réception (108) associée respective ;
présentant au moins un dispositif d'acquisition d'images (140) mis en place sur et/ou dans le corps de support (104) et permettant d'enregistrer des données d'images afin d'identifier au moins une partie de la marchandise stockée (110) dans les régions de réception (108) associées aux dispositifs de capteur (106).

6. Dispositif de stockage (102) selon l'une quelconque des revendications 1 à 5, présentant au moins une des caractéristiques ci-dessous :
être conçu sous forme d'étagère de stockage ou d'armoire de stockage ;
les régions de réception (108) sont conçues de telle manière que leur face supérieure est inclinée par rapport à l'horizontale, en particulier inclinée vers un utilisateur, afin de recevoir la marchandise stockée (110), de sorte que la marchandise stockée (110) glisse vers une face avant (126) de la région de réception (108) respective ;
les régions de réception (108) sont conçues avec des dispositifs de transport (140), en particulier des roulements à rouleaux et/ou à billes, afin de fournir un mouvement de la marchandise stockée (110) vers une face avant (126) de la région de réception (108) respective ;
les régions de réception (108) présentent un mécanisme, en particulier un mécanisme à ressort, permettant de pousser la marchandise stockée (110) vers une face avant (126) de la région de réception (108) respective ;
au moins le premier ou le deuxième module d'enregistrement (100) est monté ou peut être monté sous forme de paroi arrière, en particulier verticale, au niveau des structures de montage (124) ;
au moins une partie des régions de réception (108) est formée par différentes surfaces de réception d'un compartiment de stockage (128) commun ;
au moins une partie des régions de réception (108) est au moins partiellement garnie de marchandise stockée (110), en particulier sous forme de boîtes de stockage, de conteneurs de marchandises et/ou de produits en vrac.

7. Système de gestion de stockage (130), présentant :
une pluralité de dispositifs de stockage (102) selon l'une quelconque des revendications 1 à 6,
un dispositif de gestion (120) conçu pour gérer un stock de marchandise stockée (110) dans les régions de réception (108) des dispositifs de stockage (102) en se basant sur les informations de capteur enregistrées par les dispositifs de capteur (106).

8. Système de gestion de stockage (130) selon la revendication 7, dans lequel une marchandise spécifique (110) est associée à chaque région de réception (108) dans le dispositif de gestion (120) et la marchandise stockée(110) spécifique respective est gérée en fonction des informations de capteur du dispositif de capteur (106) associé, en particulier un réassort de la marchandise (110) spécifique respective est mis en œuvre ou déclenché si nécessaire, en outre en particulier lorsque la quantité manquante de la marchandise stockée (110) dans une région de réception (108) respective dépasse une valeur de seuil prédéfinissable ou lorsque la quantité de remplissage de la marchandise stockée (110) dans une région de réception (108) respective descend sous une valeur de seuil prédéfinissable.

9. Procédé de mise à niveau d'un dispositif de stockage (102) selon l'une quelconque des revendications 1 à 6 présentant des régions de réception (108) permettant de recevoir une marchandise stockée (110), dans lequel le procédé comprend les étapes consistant à :
monter les premier et deuxième modules d'enregistrement (100) sur des structures de montage (124), en particulier sur des barres d'étagère, du dispositif de stockage (102) ;
mettre en œuvre une mesure optique de distance au moyen d'un dispositif de capteur (106) respectif, associé à une région de réception (108) respective, du au moins un module d'enregistrement (100) afin d'enregistrer les informations de capteur indicatives d'une quantité manquante et/ou d'une quantité de remplissage de marchandise stockée (110) dans une région de réception (108) respective associée ; et
surveiller le stock de marchandise stockée (110) du dispositif de stockage (102) grâce à une évaluation des informations de capteur.

10. Procédé selon la revendication 9, dans lequel le procédé comprend une étape consistant à pousser la marchandise stockée (110) dans les régions de réception (108) depuis un dispositif de capteur (106) associé jusqu'à une extrémité (134), en particulier une butée (136) située au niveau d'une extrémité (134), de la région de réception (108) respective, laquelle extrémité (134) est opposée à une autre extrémité (138), tournée vers le dispositif de capteur (106) associé, de la région de réception (108) respective, dans lequel le procédé comprend en particulier une étape consistant à pousser la marchandise stockée (110) à distance du dispositif de capteur (106) associé grâce à un mécanisme automatique, en particulier un mécanisme gravitationnel, un mécanisme de réduction de friction et/ou un mécanisme de précontrainte à ressort.

11. Procédé selon la revendication 10, dans lequel le procédé comprend, lors du retrait d'une partie de la marchandise stockée (110) d'une face avant (126) d'une région de réception (108), une étape supplémentaire consistant à pousser la marchandise stockée (110) restante dans la région de réception (108) à distance du dispositif de capteur (106) associé, de sorte que le retrait du dispositif de capteur (106) associé est enregistré au moyen de la mesure optique de distance en raison d'une distance (D), accrue par le retrait, entre le dispositif de capteur (106) et la marchandise stockée (110) restante.

12. Procédé selon l'une quelconque des revendications 9 à 11, comprenant en outre les étapes consistant à :
déterminer une distance (D) entre le dispositif de capteur (106) respectif et une marchandise stockée (110) la plus proche dudit dispositif de capteur (106) au moyen de la mesure optique de distance ; et
déterminer la quantité manquante et/ou une quantité de remplissage de marchandise stockée (110) dans la région de réception (108) associée au dit dispositif de capteur (106) en se basant sur la distance (D) déterminée.

13. Procédé selon l'une quelconque des revendications 9 à 12, dans lequel le procédé comprend une étape consistant à déclencher un réassort de la marchandise stockée (110) respective lorsque la quantité manquante de la marchandise stockée (110) respective dépasse une valeur de seuil prédéfinissable ou lorsque la quantité de remplissage de la marchandise stockée (110) respective descend sous une valeur de seuil prédéfinissable.
